# EUROPEAN PATENT APPLICATION

(11) **EP 4 800 566 A1**
(43) Date of publication of application: **02.09.2026**
(21) Application number: 24902148.6
(22) Date of filing: 08.08.2024
(51) Int. Cl.: G06F 16/176

(54) **FILE SHARING METHOD, DEVICE AND STORAGE MEDIUM**

(30) Priority: 14.12.2023 CN 202311730631
(71) Applicant: Honor Device Co., Ltd., Shenzhen, Guangdong 518040 (CN)
(72) Inventor: ZHENG, Peng, Shenzhen, Guangdong 518040 (CN)
(74) Representative: Goddar, Heinz J.
(86) International application number: PCT/CN2024/110746
(87) International publication number: WO 2025/123722

(57) **Abstract**

This application provides a file sharing method, a device, and a storage medium, relates to the field of terminal technologies, and may be applied to a system including a first electronic device, a second electronic device, and a third electronic device, where the first electronic device is separately connected to the second electronic device and the third electronic device. The method includes: The first electronic device displays a first window, where screen content of the second electronic device is displayed in the first window, and the screen content of the second electronic device includes a first file; and when the first file is dragged from the first window to a valid screen area of the third electronic device, the third electronic device displays the first file in response to a drag-and-release operation on the first file. In the foregoing method, the first file locally stored on the second electronic device is dragged to the third electronic device for display through the first electronic device, so that cross-device file sharing in a screen collaboration scenario can be quickly and efficiently implemented.

## Description

This application claims priority to Chinese Patent Application No. 202311730631.4, filed with the China National Intellectual Property Administration on December 14, 2023 and entitled "FILE SHARING METHOD, DEVICE, AND STORAGE MEDIUM", which is incorporated herein by reference in its entirety.

### TECHNICAL FIELD

This application relates to the field of terminal technologies, and in particular, to a file sharing method, a device, and a storage medium.

### BACKGROUND

With development of cross-device collaboration and multi-screen interaction technologies, a user has increasingly more requirements for multi-screen interaction, and multi-screen collaboration scenarios are becoming increasingly diverse. The multi-screen collaboration scenario is also referred to as a screen collaboration scenario. The screen collaboration scenario includes a screen projection scenario, an extended screen scenario, a scenario involving concurrency of screen projection and an extended screen, and the like. How to implement cross-device file sharing in the screen collaboration scenario is an urgent problem to be resolved.

### SUMMARY

Embodiments of this application provide a file sharing method, a device, and a storage medium, to implement cross-device file sharing in a screen collaboration scenario.

According to a first aspect, an embodiment of this application provides a file sharing method, applied to a system including a first electronic device, a second electronic device, and a third electronic device, where the first electronic device is separately connected to the second electronic device and the third electronic device. The method includes: The first electronic device displays a first window, where screen content of the second electronic device is displayed in the first window, and the screen content of the second electronic device includes a first file; and when the first file is dragged from the first window to a valid screen area of the third electronic device, the third electronic device displays the first file in response to a drag-and-release operation on the first file.

The first electronic device is wiredly or wirelessly connected to the second electronic device, and the first electronic device is wiredly or wirelessly connected to the third electronic device. The first window displayed by the first electronic device is a collaboration window of the second electronic device, and content displayed in the first window may be consistent with content displayed on a display screen of the second electronic device. When the content displayed in the first window is consistent with the content displayed on the display screen of the second electronic device, the first window may be considered as a mirrored window of the second electronic device on the first electronic device. In an example, the first file is displayed in the first window, and the first file is displayed on the display screen of the second electronic device. The first file is a file locally stored on the second electronic device. For example, the first file may be a picture, a video, text, audio, an application, or the like.

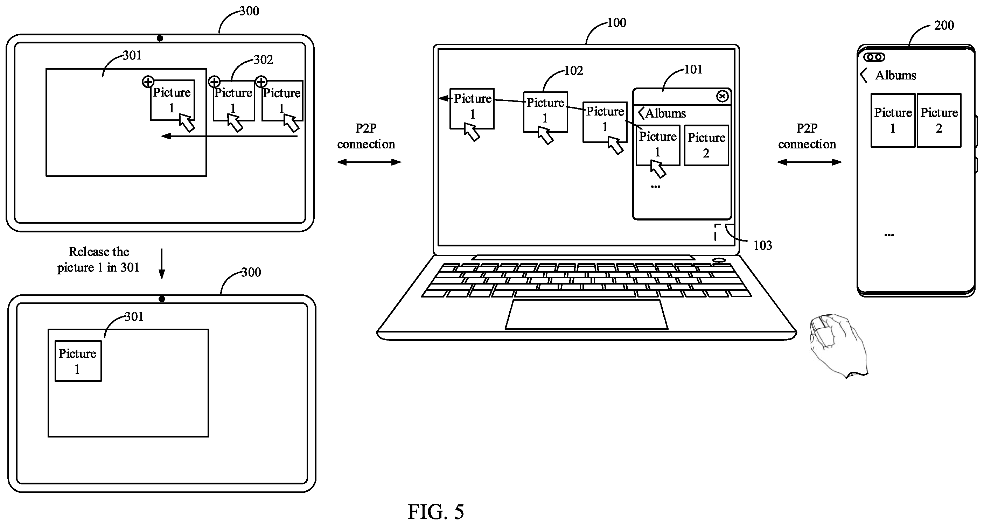

For example, referring to FIG. 5, the first electronic device is a personal computer PC 100, the second electronic device is a mobile phone 200, and the third electronic device is a tablet computer 300. The PC 100 is wiredly or wirelessly connected to the mobile phone 200, and the PC 100 is wiredly or wirelessly connected to the tablet computer 300. The first window is a window 101, and the first file displayed in the first window is a picture 1. The valid screen area of the third electronic device is an area 301 on a display screen of the tablet computer 300. A user may use a wireless mouse to drag the picture 1 across a screen edge of the PC 100 to the area 301 of the tablet computer 300 and then release the picture 1, where the picture 1 is displayed in the area 301.

In the foregoing method, content projected by the second electronic device to the first electronic device is displayed in the first window of the first electronic device, and the user drags the first file in the first window to the third electronic device across devices, so that the first file locally stored on the second electronic device is dragged to the third electronic device for display through the first electronic device. An operation process is simple, and cross-device file sharing in a screen collaboration scenario can be implemented quickly and efficiently.

In an optional embodiment of the first aspect, before the third electronic device displays the first file, the method further includes: The second electronic device transfers the first file to the first electronic device, and the first electronic device transfers the first file to the third electronic device.

In the foregoing method, the second electronic device transfers, to the third electronic device through the first electronic device, the first file dragged by the user, to implement cross-device file transfer in the screen collaboration scenario.

In an optional embodiment of the first aspect, before the second electronic device transfers the first file to the first electronic device, the method further includes: In response to the drag-and-release operation on the first file, the third electronic device determines whether a location on which the first file is released is in a valid screen area of the third electronic device; if yes, the third electronic device sends a first notification message to the first electronic device, where the first notification message is used to indicate that the first file is released in the valid screen area of the third electronic device; and the first electronic device sends a file transfer request to the second electronic device, where the file transfer request is used to request to transfer the first file.

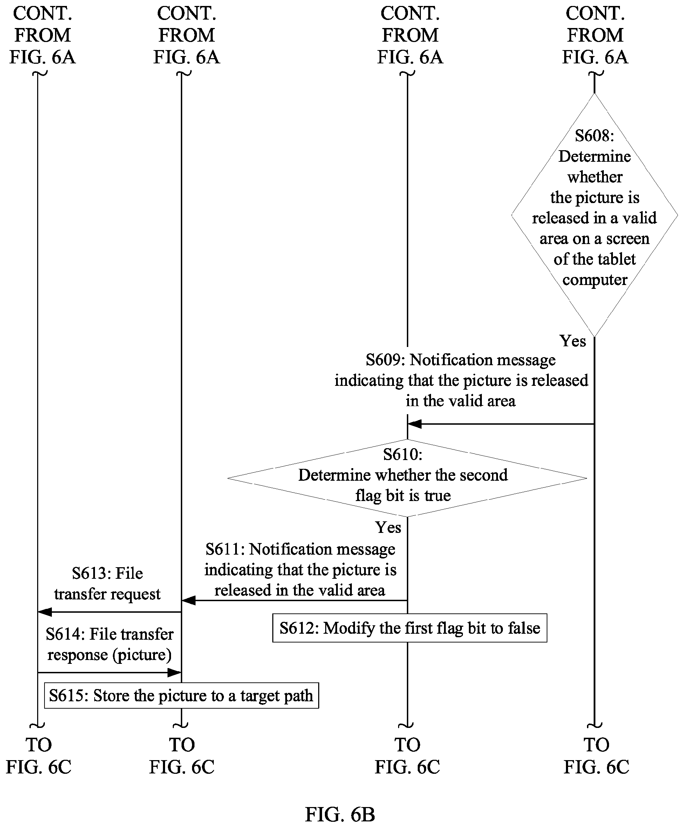

For example, still referring to FIG. 5, the drag-and-release operation on the first file is a drag-and-release operation on the picture 1 on the display screen of the tablet computer 300. The valid screen area of the third electronic device is the area 301 on the display screen of the tablet computer 300. It should be understood that, if the picture 1 is dragged to an area outside the area 301, because the area is not the valid screen area of the tablet computer 300, current cross-device dragging fails, and the tablet computer 300 does not receive the picture 1 and does not display the picture 1. The first notification message sent by the third electronic device to the first electronic device may correspond to a notification message in S609 in FIG. 6B. The first transfer request sent by the first electronic device to the second electronic device may correspond to a file transfer request in S613 in FIG. 6B.

In the foregoing method, after the first electronic device receives a notification that is sent by the third electronic device and that indicates that the file is released in the valid screen area, the first electronic device obtains the dragged first file from the second electronic device, and further transfers the first file to the third electronic device for display, thereby implementing cross-device file sharing in the screen collaboration scenario. It should be understood that if the first electronic device receives a notification that is sent by the third electronic device and that indicates that the file is not released in the valid screen area, the first electronic device does not obtain the first file from the second electronic device, and the third electronic device does not receive the first file and does not display the first file.

In an optional embodiment of the first aspect, the method further includes: The first electronic device sends a first cross-device drag event to the third electronic device when the first file is dragged from the first window to a screen edge of the first electronic device, where the first cross-device drag event is used to indicate that a file is to be dragged from the first electronic device to the third electronic device.

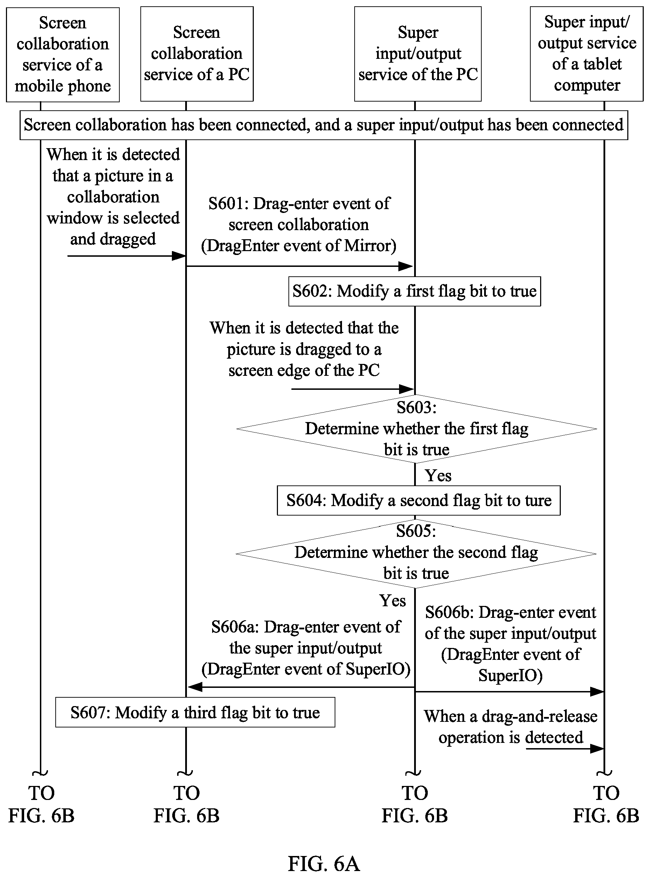

For example, still referring to FIG. 5, when the picture 1 is dragged from the window 101 of the PC 100 to a left screen edge of the PC 100, the PC 100 sends a first cross-device drag event to the tablet computer 300, to indicate that a picture is to be dragged from the PC 100 to the tablet computer 300. The first cross-device drag event may correspond to a drag-enter event of a super input/output in S606b in FIG. 6A.

In the foregoing method, when the first file is dragged to a screen edge of a primary screen of the first electronic device, the first electronic device notifies, by sending the first cross-device drag event, the third electronic device that a file is to be dragged into the third electronic device across devices, so that the third electronic device starts to monitor the dragged first file.

In an optional embodiment of the first aspect, the method further includes: The third electronic device displays a second file, where the second file is a file locally stored on the third electronic device; and when the second file is dragged from a screen of the third electronic device to the first window, the first window and the second electronic device display the second file in response to a drag-and-release operation on the second file.

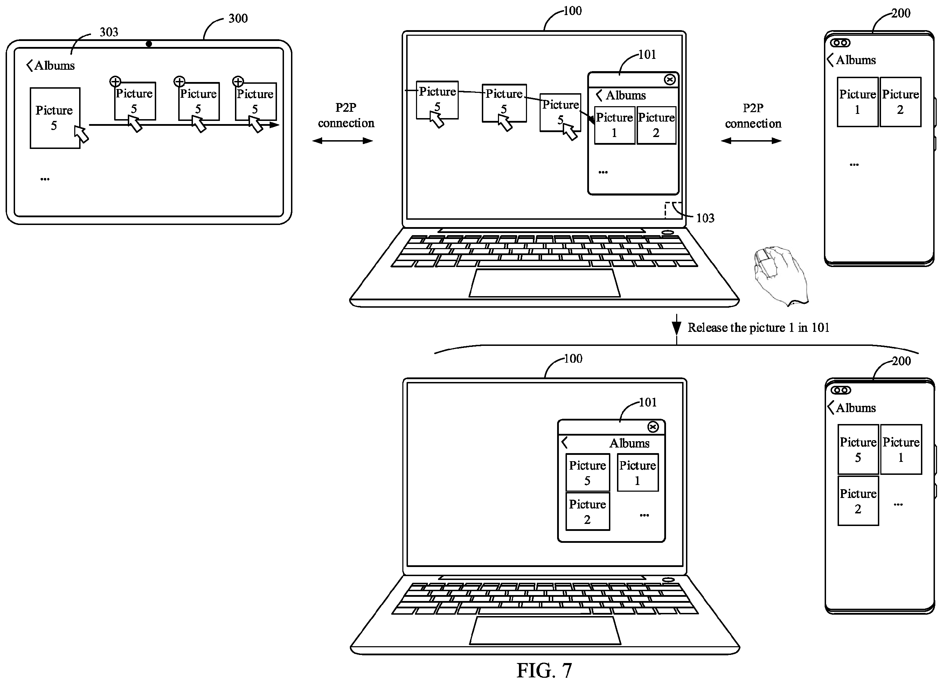

The second file may be a picture, a video, text, audio, an application, or the like. For example, referring to FIG. 7, the second file is a picture 5, and the picture 5 is displayed on the display screen of the tablet computer 300. The user may use the wireless mouse to drag the picture 5 across a screen edge of the tablet computer 300 to the window 101 of the PC 100 and then release the picture 5, where the picture 5 is displayed in the window 101, and the picture 5 is displayed on a display screen of the mobile phone 200.

In the foregoing method, content projected by the second electronic device to the first electronic device is displayed in the first window of the first electronic device. By dragging a third file in the third electronic device to the first window across devices, the user may drag the second file locally stored on the third electronic device to the second electronic device for display through the first electronic device, and the first window may synchronously display the second file. An operation process is simple, and cross-device file sharing in the screen collaboration scenario can be implemented quickly and efficiently.

In an optional embodiment of the first aspect, before the first window and the second electronic device display the second file, the method further includes: The third electronic device transfers the second file to the first electronic device, and the first electronic device transfers the second file to the second electronic device.

In the foregoing method, the third electronic device transfers, to the second electronic device through the first electronic device, the second file dragged by the user, thereby implementing cross-device file transfer in the screen collaboration scenario.

In an optional embodiment of the first aspect, that the third electronic device transfers the second file to the first electronic device includes: The first electronic device sends a second notification message to the third electronic device in response to a drag-and-release operation on the second file, where the second notification message is used to indicate that the second file is released in the first window; and the third electronic device transfers the second file to the first electronic device.

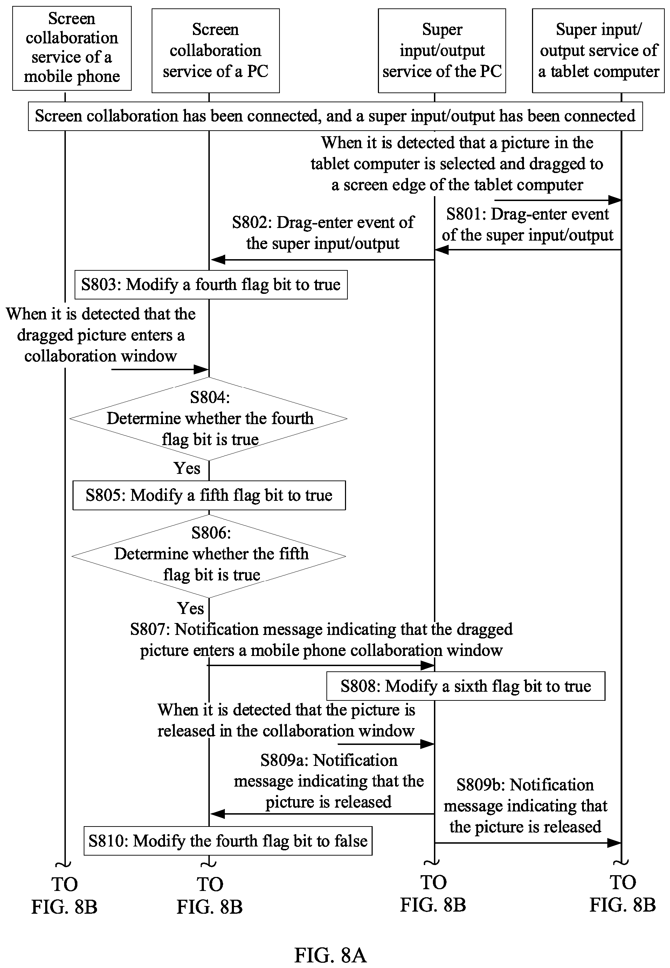

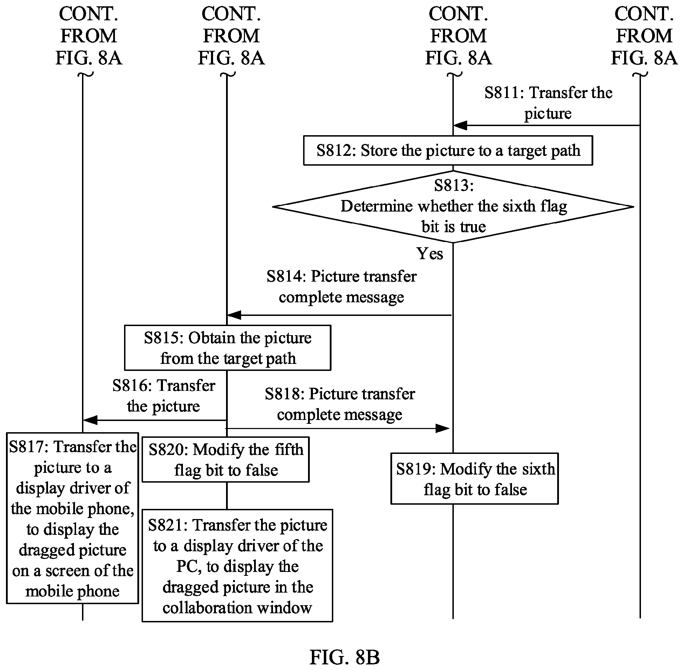

For example, still referring to FIG. 7, the drag-and-release operation on the second file is a drag-and-release operation on the picture 5 in the window 101 of the PC 100. The second notification message sent by the first electronic device to the third electronic device may correspond to a notification message in S809b in FIG. 8A. That the third electronic device transfers the second file to the first electronic device may correspond to S811 in FIG. 8B.

In the foregoing method, after the third electronic device receives a notification that is sent by the first electronic device and that indicates that a file is released in the first window, the third electronic device transfers the second file to the first electronic device, so that the first electronic device transfers the second file to the second electronic device for display, thereby implementing cross-device file sharing in the screen collaboration scenario.

In an optional embodiment of the first aspect, the method further includes: The third electronic device sends a second cross-device drag event to the first electronic device when the second file is dragged to a screen edge of the third electronic device, where the second cross-device drag event is used to indicate that a file is to be dragged from the third electronic device to the first electronic device.

For example, still referring to FIG. 7, when the picture 5 is dragged from the tablet computer 300 to a right screen edge of the tablet computer 300, the tablet computer 300 sends a second cross-device drag event to the PC 100, to indicate that a picture is to be dragged from the tablet computer 300 to the PC 100, and the second cross-device drag event may correspond to a drag-enter event of a super input/output in S801 in FIG. 8A.

In the foregoing method, when the second file is dragged to the screen edge of the third electronic device, the third electronic device notifies, by sending the second cross-device drag event, the first electronic device that a file is to be dragged into the first electronic device across devices, so that the first electronic device starts to monitor the dragged second file.

In an optional embodiment of the first aspect, the method further includes: A super input/output service of the first electronic device creates a first virtual window after the super input/output service of the first electronic device is enabled, where the first virtual window is configured to detect a cross-device drag event on a primary screen of the first electronic device.

The first virtual window is located in a lower right corner of the primary screen of the first electronic device, and may trigger the cross-device drag event on the primary screen of the first electronic device. For example, referring to FIG. 5, the first electronic device is the PC 100, and the first virtual window is a window 103 in a lower right corner of a primary screen of the PC 100. The first virtual window may be configured to detect the foregoing first cross-device drag event and the foregoing second cross-device drag event.

According to a second aspect, an embodiment of this application provides a file sharing method, applied to a system including a first electronic device, a second electronic device, and a third electronic device, where the first electronic device is separately connected to the second electronic device and the third electronic device. The method includes: The third electronic device displays an extended screen of the first electronic device, where the extended screen occupies a part of screen space of the third electronic device, a second window is displayed on the extended screen, screen content of the second electronic device is displayed in the second window, and the screen content of the second electronic device includes a third file; and when the third file is dragged from the second window to first screen space of the third electronic device other than the extended screen, the third file is displayed in the first screen space of the third electronic device in response to a drag-and-release operation on the third file.

The first electronic device is wiredly or wirelessly connected to the second electronic device, and the first electronic device is wiredly or wirelessly connected to the third electronic device. The second window is a collaboration window of the second electronic device, and content displayed in the second window may be consistent with content displayed on a display screen of the second electronic device. When the content displayed in the second window is consistent with the content displayed on the display screen of the second electronic device, the second window may be considered as a mirrored window of the second electronic device on the first electronic device. In an example, the third file is displayed in the second window, and the third file is displayed on the display screen of the second electronic device. The third file is a file locally stored on the second electronic device. For example, the third file may be a picture, a video, text, audio, an application, or the like.

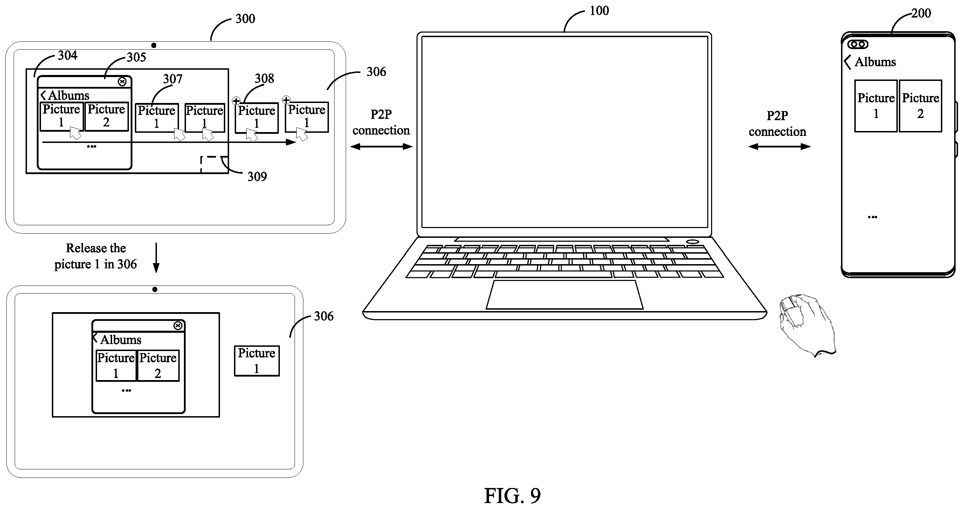

For example, referring to FIG. 9, the first electronic device is a personal computer PC 100, the second electronic device is a mobile phone 200, and the third electronic device is a tablet computer 300. The PC 100 is wiredly or wirelessly connected to the mobile phone 200, and the PC 100 is wiredly or wirelessly connected to the tablet computer 300. The extended screen of the first electronic device is an extended screen 304 that is projected by the PC 100 to the tablet computer 300, and the extended screen 304 occupies a part of screen space of a display screen of the tablet computer 300. The second window is a window 305 on the extended screen 304, and the third file displayed in the second window is a picture 1. The first screen space of the third electronic device is screen space 306 of the tablet computer 300 other than the extended screen 304. A user may use a wireless mouse to drag the picture 1 from the window 305 of the tablet computer 300 to the screen space 306 and then release the picture, where the picture 1 is displayed in the screen space 306.

In the foregoing method, the first electronic device projects the extended screen of the first electronic device onto a display screen of the third electronic device, and the second window of the second electronic device is displayed on the extended screen of the first electronic device. The user drags the third file in the second window to the first screen space of the third electronic device, to drag the third file locally stored on the second electronic device to the third electronic device for display. An operation process is simple, and cross-device file sharing in a screen collaboration scenario can be implemented quickly and efficiently.

In an optional embodiment of the second aspect, before the third file is displayed on the first screen space of the third electronic device, the method further includes: The second electronic device transfers the third file to the first electronic device, and the first electronic device transfers the third file to the third electronic device.

In the foregoing method, the second electronic device transfers, to the third electronic device through the first electronic device, the third file dragged by the user, thereby implementing cross-device file transfer in the screen collaboration scenario.

In an optional embodiment of the second aspect, the first electronic device sends a third cross-device drag event to the third electronic device when the third file is dragged from the second window to a screen edge of the extended screen of the first electronic device, where the third cross-device drag event is used to indicate that a file is to be dragged from the extended screen of the first electronic device to the third electronic device.

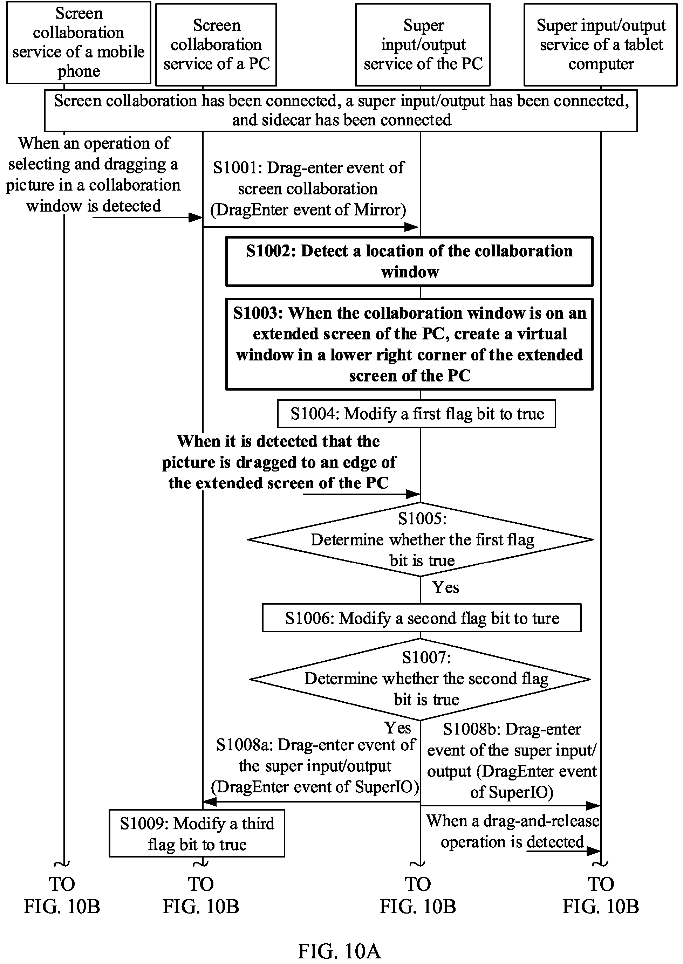

For example, still referring to FIG. 9, when the picture 1 is dragged from the window 305 to a screen edge of the extended screen 304 of the PC 100, the PC 100 sends a third cross-device drag event to the tablet computer 300, to indicate that a picture is to be dragged from the extended screen 304 of the PC 100 to the tablet computer 300, and the third cross-device drag event may correspond to a drag-enter event of a super input/output in S 1008b in FIG. 10A.

In the foregoing method, when the third file is dragged to the screen edge of the extended screen of the first electronic device, the first electronic device notifies, by sending the third cross-device drag event, the third electronic device that a file is to be dragged into the third electronic device across devices, so that the third electronic device starts to monitor the dragged third file.

In an optional embodiment of the second aspect, the method further includes: A super input/output service of the first electronic device creates a second virtual window when the third file in the second window is selected and dragged, where the second virtual window is configured to detect a cross-device drag event on the extended screen of the first electronic device.

The second virtual window is located in a lower right corner of the extended screen of the first electronic device, and may trigger the cross-device drag event on the extended screen of the first electronic device. For example, referring to FIG. 9, the first electronic device is the PC 100, and the second virtual window is a window 309 in a lower right corner of the extended screen 304 of the PC 100. The second virtual window may be configured to detect the foregoing third cross-device drag event.

In an optional embodiment of the second aspect, a first operating system is installed on the first electronic device, a second operating system is installed on the second electronic device and the third electronic device, and the first operating system and the second operating system are different.

For example, the first operating system is a windows operating system, and the second operating system is an Android operating system.

According to a third aspect, an embodiment of this application provides an electronic device, and the electronic device includes a memory and a processor. The processor is configured to invoke a computer program in the memory to perform the method of the first electronic device according to any implementation of the first aspect, the method of the second electronic device according to any implementation of the first aspect, or the method of the third electronic device according to any implementation of the first aspect.

According to a fourth aspect, an embodiment of this application provides an electronic device, and the electronic device includes a memory and a processor. The processor is configured to invoke a computer program in the memory to perform the method of the first electronic device according to any implementation of the second aspect, the method of the second electronic device according to any implementation of the second aspect, or the method of the third electronic device according to any implementation of the second aspect.

According to a fifth aspect, an embodiment of this application provides a computer-readable storage medium. The computer-readable storage medium stores a computer program. When the computer program is run on an electronic device, the electronic device is enabled to perform the method of the first electronic device according to any implementation of the first aspect, the method of the second electronic device according to any implementation of the first aspect, or the method of the third electronic device according to any implementation of the first aspect.

According to a sixth aspect, an embodiment of this application provides a computer-readable storage medium. The computer-readable storage medium stores a computer program. When the computer program is run on an electronic device, the electronic device enabled to perform the method of the first electronic device according to any implementation of the second aspect, the method of the second electronic device according to any implementation of the second aspect, or the method of the third electronic device according to any implementation of the second aspect.

According to a seventh aspect, an embodiment of this application provides a chip, and the chip includes a processor. The processor is configured to invoke a computer program in a memory to perform the method of the first electronic device according to any implementation of the first aspect, the method of the second electronic device according to any implementation of the first aspect, or the method of the third electronic device according to any implementation of the first aspect.

According to an eighth aspect, an embodiment of this application provides a chip, and the chip includes a processor. The processor is configured to invoke a computer program in a memory to perform the method of the first electronic device according to any implementation of the second aspect, the method of the second electronic device according to any implementation of the second aspect, or the method of the third electronic device according to any implementation of the second aspect.

According to a ninth aspect, an embodiment of this application provides a computer program product, including a computer program. When the computer program is run, the computer is enabled to perform the method of the first electronic device according to any implementation of the first aspect, the method of the second electronic device according to any implementation of the first aspect, or the method of the third electronic device according to any implementation of the first aspect.

According to a tenth aspect, an embodiment of this application provides a computer program product, including a computer program. When the computer program is run, the computer is enabled to perform the method of the first electronic device according to any implementation of the second aspect, the method of the second electronic device according to any implementation of the second aspect, or the method of the third electronic device according to any implementation of the second aspect.

It should be understood that, the third aspect to the tenth aspect of this application correspond to the technical solutions of the first aspect or the second aspect of this application, and beneficial effects achieved in the aspects and corresponding feasible implementations are similar. Details are not described again.

### BRIEF DESCRIPTION OF DRAWINGS

FIG. 1 is a schematic diagram 1 of a screen collaboration scenario according to an embodiment of this application;
FIG. 2 is a schematic diagram 2 of a screen collaboration scenario according to an embodiment of this application;
FIG. 3 is a schematic diagram of a structure of an electronic device according to an embodiment of this application;
FIG. 4 is a schematic diagram of a structure of another electronic device according to an embodiment of this application;
FIG. 5 is a schematic diagram 1 of a scenario of a file sharing method according to an embodiment of this application;
FIG. 6A, FIG. 6B, and FIG. 6C are a schematic flowchart 1 of a file sharing method according to an embodiment of this application;
FIG. 7 is a schematic diagram 2 of a scenario of a file sharing method according to an embodiment of this application;
FIG. 8A and FIG. 8B are a schematic flowchart 2 of a file sharing method according to an embodiment of this application;
FIG. 9 is a schematic diagram 3 of a scenario of a file sharing method according to an embodiment of this application; and
FIG. 10A, FIG. 10B, and FIG. 10C are a schematic flowchart 3 of a file sharing method according to an embodiment of this application.

### DESCRIPTION OF EMBODIMENTS

To clearly describe the technical solutions in the embodiments of this application, in the embodiments of this application, words such as "first" and "second" are used to distinguish between same items or similar items with basically the same functions and effects. A person skilled in the art may understand that the words such as "first" and "second" do not limit a quantity or an execution sequence, and the words such as "first" and "second" do not define a definite difference.

It should be noted that the words such as "example" or "for example" in the embodiments of this application are used to indicate an example, an illustration, or a description. Any embodiment or design solution described as an "example" or "for example" in this application should not be construed as being preferred or advantageous over other embodiments or design solutions. Exactly, use of the word such as "example" or "for example" is intended to present related concepts in a specific manner.

In the embodiments of this application, "at least one" means one or more, and "a plurality of" means two or more. "And/Or" describes an association relationship between associated objects, and represents that three relationships may exist. For example, "A and/or B" may represent the following cases: Only A exists, both A and B exist, and only B exists, where A and B may be singular or plural. The character "/" usually indicates an "or" relationship between associated objects. "At least one (type/item) of the following" or a similar expression thereof means any combination of these entries, including a single entry (type/item) or any combination of a plurality of entries (types/items). For example, at least one (type/item) of a, b, or c may represent a, b, c, a and b, a and c, b and c, or a, b, and c, where a, b, and c may be singular or plural.

It should be noted that user information (including but not limited to user equipment information, personal information of a user, and the like) and data (including but not limited to data used for analysis, stored data, presented data, and the like) involved in this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

For ease of understanding, related concepts in the embodiments of this application are first described for reference.

First, an electronic device is a device with a display screen. In the embodiments of this application, the electronic device may be a portable device, such as a mobile phone, a tablet computer, a wearable device having a display function and a wireless communication function, a vehicle-mounted terminal device, a virtual reality (virtual reality, VR) device, an augmented reality (augmented reality, AR) device, a personal computer (personal computer, PC), a notebook computer, a netbook, a personal digital assistant (personal digital assistant, PDA), and a smart home device (such as a smart TV). A specific technology and a specific device form that are used by the electronic device are not limited in the embodiments of this application.

Second, an external device is a device connected to an outer side of a host of a computer system, and is generally classified into an external input device, an external output device, and an external memory. The external device is an important constituent part of the computer system, and plays functions such as information transfer, input, and storage. In the embodiments of this application, the external input device may include a keyboard, a mouse, a pen input device (for example, a stylus), and the like.

Third, an application (application, APP) is also referred to as an application program, and is a software program that can implement a specific function or a plurality of specific functions. Generally, a plurality of applications such as a camera application, a short messaging service application, a browser application, and an album application may be installed in the electronic device. The application mentioned in the embodiments of this application may be an application installed at delivery of the electronic device, or may be an application downloaded from a network or obtained from another electronic device when a user uses the electronic device.

Fourth, a P2P (peer-to-peer) connection, also referred to as a point-to-point connection, refers to direct communication and data transmission between two devices without the need for relay through a centralized server. This connection manner is usually used in scenarios such as distributed computing, file sharing, and instant messaging, and can lighten burden on a server and improve data transmission efficiency and security. In the embodiments of this application, a communication connection between devices may be a P2P connection.

Fifth, a super input/output service is a multi-device collaboration function of the electronic device, and may share an external input device with a nearby device. In the embodiments of this application, a PC may share a mouse, a keyboard, a pen input device, and the like of the PC with a nearby device such as a tablet computer.

Sixth, a screen collaboration service is a multi-device collaboration function of the electronic device, and may be connected to and collaborate with a nearby device to share screen content. Collaborative work may be screen content mirroring or extension between different devices. In the embodiments of this application, the screen collaboration service mainly refers to mirroring of screen content between devices, for example, a mobile phone projects a mirrored screen of the mobile phone onto a PC.

Seventh, a sidecar service is a screen collaboration function of the electronic device, and can project an extended screen of the device onto a screen of a nearby device. In the embodiments of this application, a PC may project an extended screen of the PC to, for example, a tablet computer.

An embodiment of this application provides a file sharing method, and the method is used to share a file among a plurality of electronic devices for which screen collaboration is established. The plurality of electronic devices for which screen collaboration is established include at least two electronic devices. The shared file may be an application, a picture, a video, audio, text, or the like.

A screen collaboration scenario of a file sharing method according to an embodiment of this application is described below with reference to the accompanying drawings.

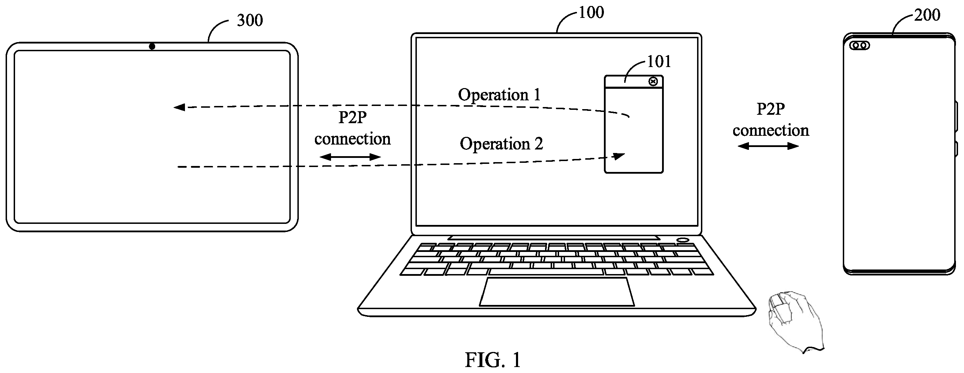

Scenario 1: FIG. 1 is a schematic diagram 1 of a screen collaboration scenario according to an embodiment of this application. As shown in FIG. 1, this scenario includes a PC 100, a mobile phone 200, and a tablet computer 300. The PC 100 is separately communicatively connected to the mobile phone 200 and the tablet computer 300. In FIG. 1, a communication connection between devices is a wireless fidelity (wireless fidelity, Wi-Fi) P2P connection. In some embodiments, the devices may be alternatively connected in a wired manner, for example, connected by using a universal serial bus (universal serial bus, USB).

A screen collaboration connection has been established between the PC 100 and the mobile phone 200. The mobile phone 200 projects content on a display screen of the mobile phone 200 to a display screen of the PC 100 for display, for example, a window 101 in FIG. 1. The window 101 is a collaboration window of the mobile phone 200. Generally, content displayed in the window 101 is consistent with content displayed on the screen of the mobile phone 200, and the window 101 may also be referred to as a mirrored screen of the mobile phone 200.

In some embodiments, the content displayed in the window 101 may be alternatively inconsistent with the content displayed on the screen of the mobile phone 200.

The window 101 is located on an upper layer of the screen of the PC 100, and a user may drag the window 101 to any location on the screen of the PC 100, or adjust a window size of the window 101 on the screen of the PC 100.

After a P2P connection is established between devices, the user may access a computer manager of the PC 100, and quickly establish the screen collaboration connection between the PC 100 and the mobile phone 200 in multi-screen collaboration in the computer manager. For example, the user scans, by using the mobile phone, a two-dimensional code presented in the multi-screen collaboration, to establish the screen collaboration connection. Certainly, the connection may be alternatively established in another manner, which is not limited in this embodiment of this application.

A super input/output connection has been established between the PC 100 and the tablet computer 300. The PC 100 and the tablet computer 300 may share an external input device such as a keyboard, a mouse, or a stylus of the PC 100. The keyboard and the mouse of the PC 100 may shuttle between the devices to operate the PC 100 and the tablet computer, or drag and transfer a picture, a file, and the like between the devices. The external input device used by the user in FIG. 1 is a wireless mouse.

After a P2P connection is established between devices, the user may consecutively click a screen edge of the PC 100 twice by moving a pointer of the mouse, to establish the super input/output connection. Certainly, the connection may be alternatively established in another manner, which is not limited in this embodiment of this application.

Based on the screen collaboration scenario shown in FIG. 1, an embodiment of this application provides a file sharing method. In response to an operation 1 shown in FIG. 1, a file in a mobile phone collaboration window on the screen of the PC may be transferred to the tablet computer through the PC, and a successfully transferred file is displayed on a screen of the tablet computer. In response to an operation 2 shown in FIG. 1, a file in the tablet computer may be transferred to the mobile phone through the PC, and a successfully transferred file is displayed on the screen of the mobile phone and in the mobile phone collaboration window on the screen of the PC. In the foregoing method, cross-device file sharing in the screen collaboration scenario (screen projection) can be implemented quickly and efficiently, and simplicity of a user operation can be improved.

The operation 1 is a cross-device drag operation starting from the mobile phone collaboration window on the screen of the PC and released on the screen of the tablet computer, and the operation 2 is a cross-device drag operation starting from the screen of the tablet computer and released in the mobile phone collaboration window on the screen of the PC.

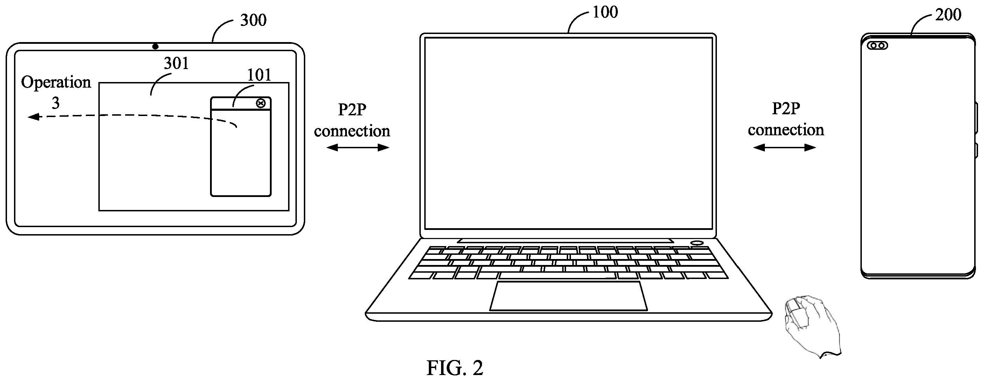

Scenario 2: FIG. 2 is a schematic diagram 2 of a screen collaboration scenario according to an embodiment of this application. As shown in FIG. 2, this scenario also includes a PC 100, a mobile phone 200, and a tablet computer 300. The PC 100 is separately communicatively connected to the mobile phone 200 and the tablet computer 300, for example, through P2P connections. A screen collaboration connection has been established between the PC 100 and the mobile phone 200, and a super input/output connection has been established between the PC 100 and the tablet computer 300. For related content, reference may be made to the foregoing description.

Different from FIG. 1, the PC 100 is further in a sidecar connection with the tablet computer 300. The PC 100 may project a file on an extended screen of the PC 100 to a display screen of the tablet computer 300, for example, an extended screen 301 shown in FIG. 2. The extended screen 301 is located on an upper layer of the screen of the tablet computer 300, and occupies a part of screen space of the tablet computer 300. In some embodiments, the extended screen 301 may alternatively occupy an entire screen of the tablet computer 300.

Different from FIG. 1, a window 101 is located at an upper layer of the extended screen 301, and a user may drag the window 101 to any location on the extended screen 301, or adjust a window size of the window 101 on the extended screen 301. In some embodiments, the user may alternatively drag the window 101 located on the extended screen 301 into a screen of the PC 100.

After a P2P connection is established between devices, the user may access a computer manager of the PC 100, and quickly establish a sidecar connection between the PC 100 and the tablet computer 300 in multi-screen collaboration in the computer manager.

Based on the screen collaboration scenario shown in FIG. 2, an embodiment of this application provides a file sharing method. In response to an operation 3 shown in FIG. 2, a file in a mobile phone collaboration window on the extended screen of the PC may be transferred to the tablet computer through the PC, and a successfully transferred file is displayed in screen space on the screen of the tablet computer other than the extended screen of the PC. In the foregoing method, cross-device file sharing in the screen collaboration scenario (involving concurrency of screen projection and an extended screen) can be implemented quickly and efficiently, and simplicity of a user operation can be improved.

The operation 3 is a drag operation starting from the mobile phone collaboration window on the extended screen of the PC and released in the screen space on the tablet computer other than the extended screen of the PC.

To facilitate understanding of the file sharing method in this application, the following describes a structure of the electronic device involved in the foregoing scenario 1 and scenario 2.

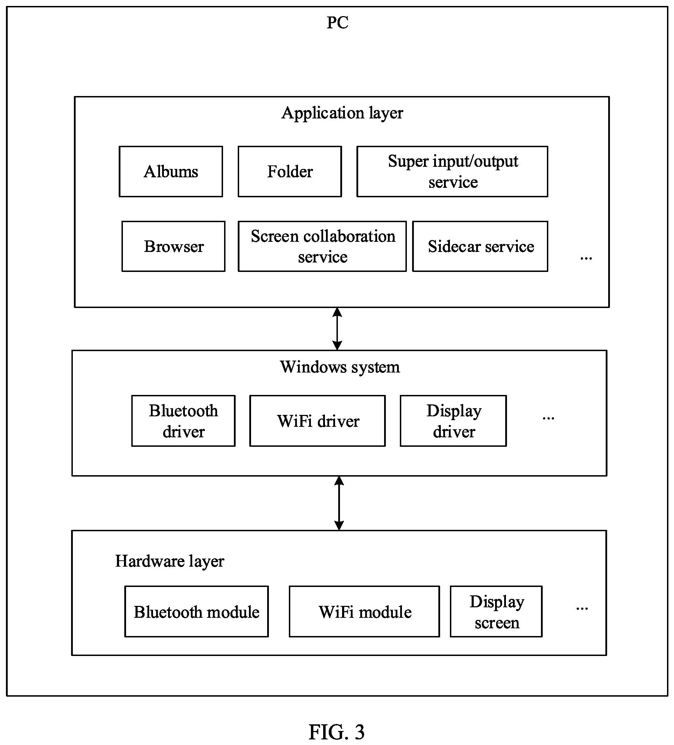

FIG. 3 is a schematic diagram of a structure of an electronic device according to an embodiment of this application. For example, the electronic device is a PC. As shown in FIG. 3, the PC may include an application layer, a windows system, and a hardware layer.

The application layer may include an application such as Albums, Folder, or Browser. In this embodiment of this application, the application layer further includes a super input/output service, a screen collaboration service, and a sidecar service. A super input/output service of the PC may learn a cross-device drag event (for example, dragging a file on the PC to a tablet computer), a cross-device drag-leave event (for example, dragging a file on the tablet computer to the PC and then releasing the file), and the like on the PC. A screen collaboration service of the PC may obtain screen content of an external screen projection device (for example, a mobile phone), and present the screen content of the external screen projection device on a screen of the PC. A sidecar service of the PC may transfer content of an extended screen of the PC to an externally connected device (for example, the tablet computer), to extend the screen of the PC.

The windows system may include a Bluetooth driver and a wireless fidelity (wireless fidelity, WiFi) driver. The hardware layer includes a Bluetooth module, a WiFi module, and a display screen. The Bluetooth driver is configured to drive the Bluetooth module to work, so that the PC establishes a Bluetooth connection to another device. The WiFi driver is configured to drive the WiFi module to work, so that the PC establishes a WiFi connection to another device. A display driver is configured to drive the display screen to work.

It should be noted that layers in a layered structure of the PC shown in FIG. 3 and modules or components included in each layer do not constitute a specific limitation on the PC. In some other embodiments, the PC may include more or fewer layers than those shown in the figure, and each layer may include more or fewer components. This is not limited in this embodiment of this application.

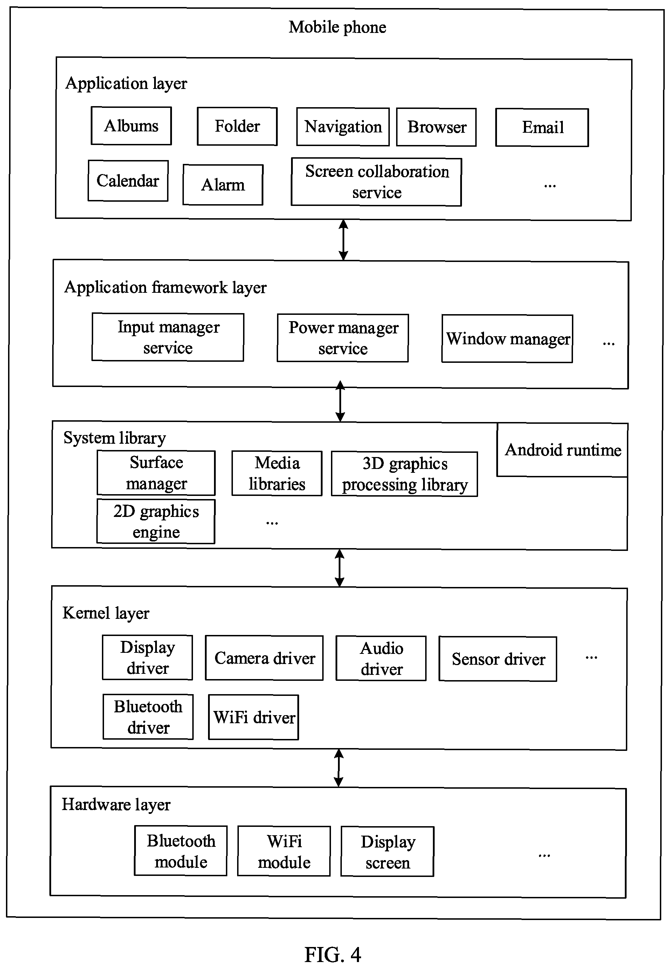

FIG. 4 is a schematic diagram of a structure of another electronic device according to an embodiment of this application. For example, the electronic device is a mobile phone. A software system of the mobile phone may use a layered architecture, an event-driven architecture, a microkernel architecture, a micro-service architecture, or a cloud architecture. In this embodiment of this application, an Android (Android) system is used as an example of a software system with a layered architecture to describe a software structure of the mobile phone.

As shown in FIG. 4, the layered architecture divides the software system of the mobile phone into several layers, and each layer has a clear role and task. Layers communicate with each other through a software interface. In some embodiments, the Android system may be divided into four layers that are respectively an application layer, an application framework layer, an Android runtime (Android runtime) and system library, and a kernel layer.

The application layer may include a series of application packages, for example, applications such as Albums, Folder, Navigation, Browser, Email, Calendar, and Alarm. In this embodiment of this application, the application layer further includes a screen collaboration service. A screen collaboration service of the mobile phone may exchange data with a screen collaboration service of a PC, for example, transfer screen content of the mobile phone, to display a mobile phone collaboration window on a screen of the PC, as shown in the window 101 in FIG. 1.

The application framework layer provides an application programming interface (application programming interface, API) and a programming framework for an application at the application layer. In some embodiments, the application framework layer includes, for example, an input management service, a power management service, and a window management service.

The Android runtime includes a kernel library and a virtual machine. The Android runtime is responsible for scheduling and management of the Android system. The kernel library includes two parts: functional functions that need to be invoked by java language, and a kernel library of Android. The application layer and the application framework layer run in the virtual machine. The virtual machine executes a binary file of a java file at the application layer and the application framework layer. The virtual machine is configured to perform functions such as object lifecycle management, stack management, thread management, security and abnormity management, and garbage collection.

The system library may include a plurality of functional modules, for example, a surface manager (surface manager), media libraries (Media Libraries), a three-dimensional (3D) graphics processing library (for example, OpenGL ES), and a two-dimensional (2D) graphics engine (for example, SGL).

The kernel layer is a layer between hardware and software. The kernel layer includes, for example, a display driver, a camera driver, an audio driver, a sensor driver, a Bluetooth driver, and a WiFi driver. This is not limited in this embodiment of this application.

The hardware layer includes a Bluetooth module, a WiFi module, a display screen, and the like.

It may be noted that layers in the layered structure of the mobile phone shown in FIG. 4 and modules or components included in each layer do not constitute a specific limitation on the mobile phone. In some other embodiments, the mobile phone may include more or fewer layers than those shown in the figure, and each layer may include more or fewer components. This is not limited in this embodiment of this application.

In this embodiment of this application, for a structure of a tablet computer, reference may be made to FIG. 4. An application layer of the tablet computer may include a super input/output service and a sidecar service. The super input/output service of the tablet computer may learn a cross-device drag event (for example, dragging a file from a PC to the tablet computer), a cross-device drag-and-release event (for example, releasing, on the tablet computer, a file that is dragged across devices), and the like on the tablet computer. The sidecar service of the tablet computer may receive content of an extended screen of the PC that is transferred by the PC, and present the extended screen of the PC on a screen of the tablet computer.

Based on the device structures shown in FIG. 3 and FIG. 4, the file sharing methods in the foregoing scenario 1 and scenario 2 are separately described in detail below with reference to specific embodiments.

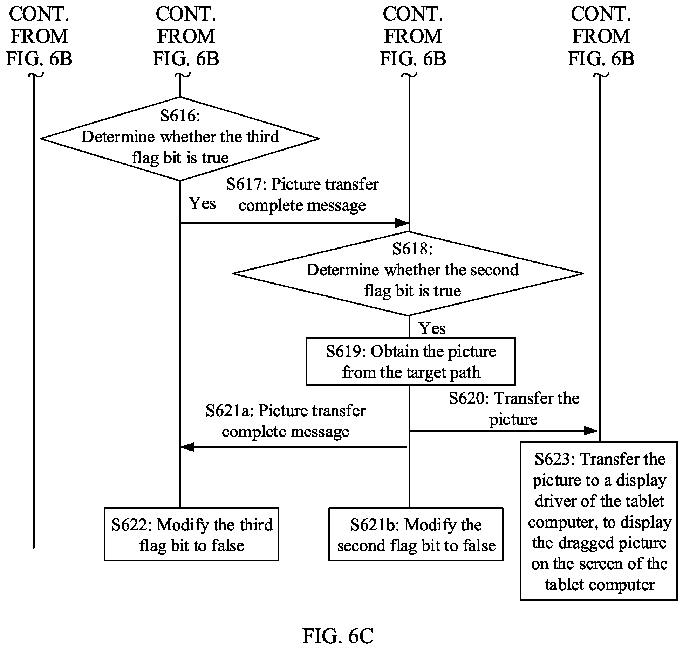

The file sharing method in the scenario 1 corresponds to the following embodiments shown in FIG. 5 to FIG. 8A and FIG. 8B. Specifically, a file sharing method based on the operation 1 is described in detail in an embodiment shown in FIG. 5 and FIG. 6A, FIG. 6B, and FIG. 6C, and a file sharing method based on the operation 2 is described in detail in an embodiment shown in FIG. 7 and FIG. 8A and FIG. 8B.

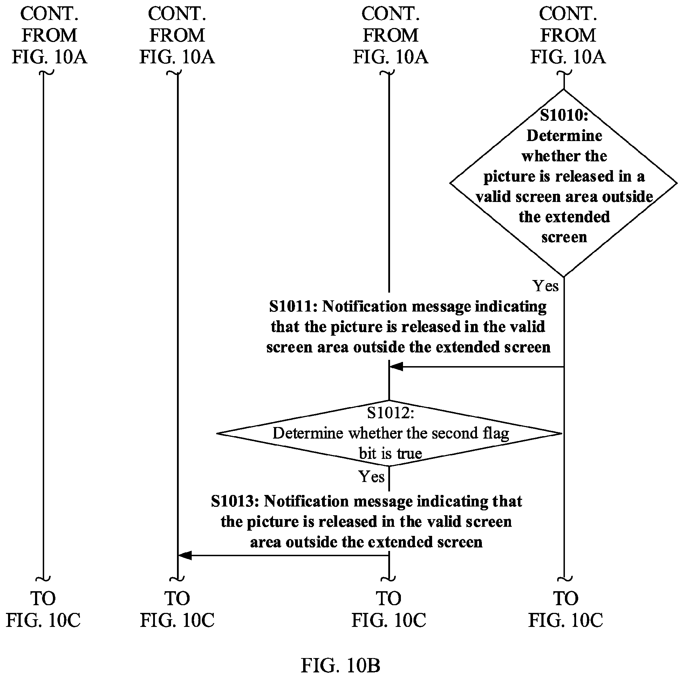

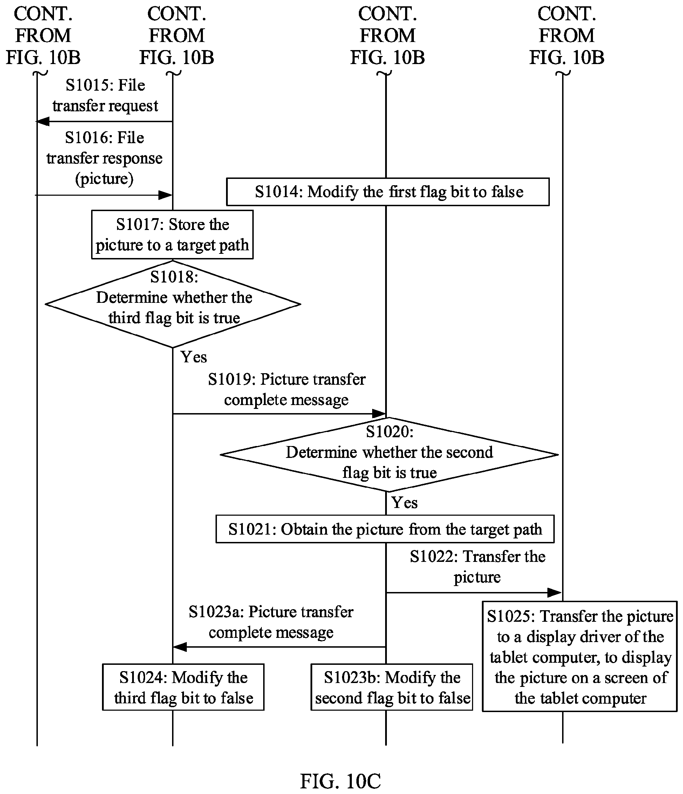

The file sharing method in the scenario 2 corresponds to the following embodiment shown in FIG. 9 and FIG. 10A, FIG. 10B, and FIG. 10C. A file sharing method based on the operation 3 is described in detail in the embodiment shown in FIG. 9 and FIG. 10A, FIG. 10B, and FIG. 10C.

For ease of understanding, transfer of a picture is used as an example in all the following several embodiments for description of solutions. For transfer of another type of file, reference may be made to the following several embodiments.

FIG. 5 is a schematic diagram 1 of a scenario of a file sharing method according to an embodiment of this application. As shown in FIG. 5, a collaboration window 101 of a mobile phone 200 is displayed on a screen of a PC 100, and an interface of an album application of the mobile phone 200 is synchronously displayed in the window 101 and on a screen of the mobile phone 200. A plurality of pictures, such as a picture 1 and a picture 2, are displayed in the interface. A user may use a wireless mouse to select a picture such as the picture 1 in the window 101, drag the picture 1 from the window 101 to a left screen edge of the PC 100, and then enter a right screen edge of a tablet computer 300, and release the picture 1 when the picture 1 is dragged to a valid area 301 on a screen of the tablet computer 300. The mobile phone 200 transfers the picture 1 in the album application of the mobile phone 200 to the tablet computer 300 through the PC 100, and displays the picture 1 in the valid area 301 of the tablet computer 300. The valid area 301 may occupy a part of screen space of the tablet computer 300. In some embodiments, the valid area 301 may alternatively occupy an entire screen of the tablet computer 300.

In a process of dragging the picture on the screen of the PC 100, at a specific moment, as shown in 102 in FIG. 5, a cursor is presented on the screen of the PC 100, and a picture thumbnail is presented below the cursor. In a process of dragging the picture on the screen of the tablet computer 300, at a specific moment, as shown in 302 in FIG. 5, a cursor is presented on the screen of the tablet computer 300, a picture thumbnail is presented below the cursor, and a plus sign may be displayed in an upper left corner of the picture thumbnail, to indicate that a picture is imported into the tablet computer. FIG. 5 is merely an example. Styles of dragging a picture on different types of devices are not limited in this embodiment of this application.

Based on the scenario shown in FIG. 5, a process of interaction between devices is described in detail below with reference to FIG. 6A, FIG. 6B, and FIG. 6C.

FIG. 6A, FIG. 6B, and FIG. 6C are a schematic flowchart 1 of a file sharing method according to an embodiment of this application. The file sharing method shown in FIG. 6A, FIG. 6B, and FIG. 6C relates to a screen collaboration service of a mobile phone, a screen collaboration service and a super input/output service of a PC, and a super input/output service of a tablet computer. In FIG. 6A, FIG. 6B, and FIG. 6C, a screen collaboration has been established between the mobile phone and the PC, and a super input/output has been established between the PC and the tablet computer.

As shown in FIG. 6A, FIG. 6B, and FIG. 6C, the file sharing method includes the following steps.

S601: When it is detected that a picture in a collaboration window is selected and dragged, the screen collaboration service of the PC sends a drag-enter event of screen collaboration to the super input/output service of the PC.

The drag-enter event of screen collaboration (a DragEnter event of Mirror) refers to an event, triggered in a mobile phone collaboration window, that a file is selected and dragged. In this embodiment, the file is a picture.

For example, as shown in FIG. 5, when a user selects and drags a picture 1 in a window 101, the screen collaboration service of the PC sends the drag-enter event of screen collaboration to the super input/output service of the PC.

S602: The super input/output service of the PC modifies a first flag bit to true.

An initial value of the first flag bit may be false. After the super input/output service of the PC receives the drag-enter event sent by the screen collaboration service of the PC, the super input/output service of the PC modifies the first flag bit from false to true, and the modified first flag bit may be denoted as mirrorDragFileFlag_=true, to indicate that a file is dragged out of the mobile phone collaboration window.

S603: When detecting that the picture is dragged to a screen edge of the PC, the super input/output service of the PC determines whether the first flag bit is ture.

S604: If it is determined that the first flag bit is true, the super input/output service of the PC modifies a second flag bit to true.

For example, as shown in FIG. 5, when the picture 1 is dragged to a left screen edge of the PC, the super input/output service of the PC determines whether the first flag bit is ture.

An initial value of the second flag bit may be false. When it is detected that the picture is dragged to a screen edge of the PC (a drag-enter event of a super input/output), the super input/output service of the PC may re-confirm whether the first flag bit is true, and a purpose is to check whether the drag-enter event of the super input/output is triggered based on the drag-enter event of screen collaboration. If yes, the second flag bit is modified to true.

The modified second flag bit may be denoted as transFileFromMirrorFlag_=true, to indicate that a file is dragged out of the mobile phone collaboration window and dragged across devices. The second flag bit may be considered as a total flag bit, recorded by the super input/output of the PC, of concurrency (referred to as collaborative input/output dragging) of screen collaboration and dragging by the super input/output.

S605: The super input/output service of the PC determines whether the second flag bit is true.

S606a: If it is determined that the second flag bit is true, the super input/output service of the PC sends a drag-enter event of the super input/output to the screen collaboration service of the PC.

S606b: If it is determined that the second flag bit is true, the super input/output service of the PC sends a drag-enter event of the super input/output to the super input/output service of the tablet computer.

In this embodiment, the drag-enter event of the super input/output (a DragEnter event of SuperIO) refers to a cross-device drag event triggered on the screen edge of the PC. Before separately sending the drag-enter event of the super input/output to the screen collaboration service of the PC and the super input/output service of the tablet computer, the super input/output service of the PC may re-confirm whether the second flag bit is true, and a purpose is to check whether a current scenario is a scenario of collaborative input/output dragging.

An execution sequence of S606a and S606b is not limited in this embodiment, and S606a and S606b may be performed simultaneously or sequentially.

In some embodiments, after S604, when it is detected that the file is not released after the dragged picture traverses to a screen of the tablet computer, and the picture is dragged again to return to the screen of the PC, the super input/output service of the PC triggers a drag-leave (DragLeave) event of the super input/output, and modifies the second flag bit from true to false.

After S606a, the following step may be performed:
S607: The screen collaboration service of the PC modifies a third flag bit to true.

An initial value of the third flag bit may be false. After receiving the drag-enter event of the super input/output that is sent by the super input/output service of the PC, the screen collaboration service of the PC may learn that the picture dragged out of the mobile phone collaboration window is being dragged across devices, and the screen collaboration service of the PC modifies the third flag bit to true, to record collaborative input/output dragging. The modified third flag bit may be denoted as superIODragEnter_=true, to indicate that a file is dragged out of the mobile phone collaboration window and dragged across devices.

After S606b, the following steps may be performed:
S608: When detecting a drag-and-release operation, the super input/output service of the tablet computer determines whether the picture is released in a valid area on the screen of the tablet computer.

For example, as shown in FIG. 5, when the picture 1 dragged across devices is released, the super input/output service of the tablet computer determines whether the picture 1 is released in the valid area on the screen of the tablet computer.

S609: If it is determined that the picture is released in the valid area on the screen of the tablet computer, the super input/output service of the tablet computer sends, to the super input/output service of the PC, a notification message indicating that the picture is released in the valid area.

S610: The super input/output service of the PC determines whether the second flag bit is true.

S611: If it is determined that the second flag bit is true, the super input/output service of the PC sends, to the screen collaboration service of the PC, a notification message indicating that the picture is released in the valid area.

The super input/output service of the PC determines whether the second flag bit is true, to learn whether the current scenario is the scenario of collaboration input/output dragging. If the second flag bit is true, the super input/output service of the PC determines that the current scenario is the scenario of collaborative input/output dragging, and may synchronize, with the screen collaboration service of the PC, the notification message indicating that the picture is released in the valid area.

S612: If it is determined that the second flag bit is true, the super input/output service of the PC modifies the first flag bit to false.

After the super input/output service of the PC receives the notification message that is sent by the super input/output service of the tablet computer and that indicates that the picture is released in the valid area, and determines that the current scenario is the scenario of collaborative input/output dragging, the super input/output service of the PC modifies the first flag bit from true to false, and the modified first flag bit may be denoted as mirrorDragFileFlag_=false, to indicate that no file is currently dragged out of the mobile phone collaboration window.

An execution sequence of S611 and S612 is not limited in this embodiment, and S611 and S612 may be performed simultaneously or sequentially.

After S611, the following step may be performed:
S613: The screen collaboration of the PC sends a file transfer request to the screen collaboration of the mobile phone.

S614: The screen collaboration service of the mobile phone sends a file transfer response to the screen collaboration service of the PC, where the file transfer response includes a dragged picture in the album application in the mobile phone, for example, the picture 1 in FIG. 5.

S615: The screen collaboration service of the PC stores the picture to a target path.

The target path is a default path used by the screen collaboration service of the PC to store a file.

S616: The screen collaboration service of the PC determines whether the third flag bit is true.

S617: If it is determined that the third flag bit is true, the screen collaboration service of the PC sends a picture transfer complete message to the super input/output service of the PC.

The screen collaboration service of the PC determines whether the third flag bit is true, to learn whether the current scenario is the scenario of collaborative input/output dragging. If the third flag bit is true, the screen collaboration service of the PC determines that the current scenario is the scenario of collaborative input/output dragging, and may send the picture transfer complete message to the super input/output service of the PC.

S618: The super input/output service of the PC determines whether the second flag bit is true.

S619: If it is determined that the second flag bit is true, the super input/output service of the PC obtains the picture from the target path.

The super input/output service of the PC determines whether the second flag bit is true, to learn whether the current scenario is the scenario of collaborative input/output dragging. If the second flag bit is true, the super input/output service of the PC determines that the current scenario is the scenario of collaborative input/output dragging, and may obtain the picture from the target path.

S620: The super input/output service of the PC transfers the picture to the super input/output service of the tablet computer.

S621a: After the picture is transferred to the tablet computer, the super input/output service of the PC sends a picture transfer complete message to the screen collaboration service of the PC.

S621b: After the picture is transferred to the tablet computer, the super input/output service of the PC modifies the second flag bit to false.

The modified second flag bit may be denoted as transFileFromMirrorFlag_=false, to indicate that no file is currently dragged out of the mobile phone collaboration window and dragged across devices, that is, to indicate that a procedure of collaborative input/output dragging ends.

An execution sequence of S621a and S621b is not limited in this embodiment, and S621a and S621b may be performed simultaneously or sequentially.

After S621a, the following step may be performed:

S622: The screen collaboration service of the PC modifies the third flag bit to false. The modified third flag bit may be denoted as superIODragEnter_=false, to indicate that no file is currently dragged out of the mobile phone collaboration window and dragged across devices.

After S620, the following step may be performed:
S623: The super input/output service of the tablet computer transfers the picture to a display driver of the tablet computer to display the dragged picture on the screen of the tablet computer.

The transferred picture may be displayed any location in the valid area on the screen of the tablet computer.

For example, as shown in FIG. 5, when the picture 1 dragged across devices is released in the valid area of the tablet computer, if the valid area is a picture list area, the picture 1 may be displayed on a first location in the picture list.

In some embodiments, the picture may be alternatively displayed on a location on which the picture is released.

Based on the file sharing method shown in this embodiment, through information exchange between the screen collaboration service of the mobile phone, the screen collaboration service of the PC, the super input/output service of the PC, and the super input/output service of the tablet computer, a file that is selected by the user in the mobile phone collaboration window and that is dragged across devices may be transferred to the tablet computer through the PC, and the file is displayed on the screen of the tablet computer. In the foregoing solution, cross-device file sharing in a screen collaboration scenario can be implemented quickly and efficiently, and simplicity of a user operation can be improved.

FIG. 7 is a schematic diagram 2 of a scenario of a file sharing method according to an embodiment of this application. As shown in FIG. 7, a collaboration window 101 of a mobile phone 200 is displayed on a screen of a PC 100, and an interface of an album application of the mobile phone 200 is synchronously displayed in the window 101 and on a screen of the mobile phone 200. A plurality of pictures, such as a picture 1 and a picture 2, are displayed in the interface. A user may use a wireless mouse to traverse to a screen of a tablet computer 300. An interface 303 of an album application of the tablet computer 300 is displayed on the screen of the tablet computer 300, and a plurality of pictures including, for example, a picture 5, are displayed in the interface 303.

The user may use the wireless mouse to select the picture 5 in the interface 303, drag the picture 5 to a right screen edge of the tablet computer 300, and then enter a left screen edge of the PC 100, and release the picture 5 after the picture 5 is dragged to the window 101 on the screen of the PC 100. The tablet computer 300 transfers the picture 5 in the album application of the tablet computer 300 to the mobile phone 200 through the PC 100, and the picture 5 is displayed in the collaboration window 101 of the mobile phone 200 and on the screen of the mobile phone 200. A location on which the picture 5 is displayed is not limited to a location of a first picture in an album. In some embodiments, the picture 5 may be alternatively displayed on a location on which the picture 5 is released.

Based on the scenario shown in FIG. 7, a process of interaction between devices is described in detail below with reference to FIG. 8A and FIG. 8B.

FIG. 8A and FIG. 8B are a schematic flowchart 2 of a file sharing method according to an embodiment of this application. The file sharing method shown in FIG. 8A and FIG. 8B relates to a screen collaboration service of a mobile phone, a screen collaboration service and a super input/output service of a PC, and a super input/output service of a tablet computer. In FIG. 8A and FIG. 8B, screen collaboration has been established between the mobile phone and the PC, and a super input/output has been established between the PC and the tablet computer.

As shown in FIG. 8A and FIG. 8B, the file sharing method includes the following steps.

S801: When it is detected that a picture in the tablet computer is selected and dragged to a screen edge of the tablet computer, the super input/output service of the tablet sends a drag-enter event of the super input/output to the super input/output service of the PC.

In this embodiment, the drag-enter event of the super input/output refers to a cross-device drag event triggered on the screen edge of the tablet computer. For example, as shown in FIG. 7, when a user selects and drags a picture 5 in the tablet computer to a right screen edge of the tablet computer, the super input/output service of the tablet computer sends the drag-enter event of the super input/output to the super input/output service of the PC.

S802: The super input/output service of the PC sends the drag-enter event of the super input/output to the screen collaboration service of the PC.

Because a screen collaboration service of the PC in a screen collaboration scenario shown in FIG. 7 is enabled, after receiving the drag-enter event of the super input/output that is sent by the super input/output service of the tablet computer, the super input/output service of the PC may send the drag-enter event of the super input/output to the screen collaboration service of the PC, to notify the screen collaboration service of the PC that the super input/output is dragging a file.

S803: The screen collaboration service of the PC modifies a fourth flag bit to true.

An initial value of the fourth flag bit may be false. After receiving the drag-enter event of the super input/output, the screen collaboration service of the PC may modify the fourth flag bit from false to true, and the modified fourth flag bit may be denoted as superIODragFileFlag_=true, to indicate that the super input/output of the PC is dragging a file across devices.

S804: When it is detected that the dragged picture enters a collaboration window, the screen collaboration service of the PC determines whether the fourth flag bit is true.

S805: If it is determined that the fourth flag bit is true, the screen collaboration service of the PC modifies a fifth flag bit to true.

For example, as shown in FIG. 7, when the dragged picture 5 enters the window 101 of the PC 100, the screen collaboration service of the PC determines whether the fourth flag bit is true.

An initial value of the fifth flag bit may be false. When it is detected that the dragged picture enters the collaboration window (a drag-enter event of screen collaboration), the screen collaboration service of the PC may re-confirm whether the fourth flag bit is true, and a purpose is to check whether the drag-enter event of the input/output service is still in progress. If the drag-enter event of the input/output service is still in progress (the fourth flag bit is true), it indicates that the drag-enter event of screen collaboration is triggered based on the drag-enter event of the input/output service. In this case, the screen collaboration service of the PC modifies the fifth flag bit from false to true. In this way, the following problem can be avoided: An operation is interrupted after the drag-enter event of the input/output service, but the drag-enter event of screen collaboration is triggered, and consequently, the fifth flag bit is modified by mistake.

The modified fifth flag bit may be denoted as superIODragFileToMirror_=true, to indicate that a file is dragged from the tablet computer across devices to a mobile phone collaboration window of the PC. The fifth flag bit may be considered as a total flag bit, recorded by the screen collaboration of the PC, of concurrency of screen collaboration and dragging by the super input/output.

S806: The screen collaboration service of the PC determines whether the fifth flag bit is true.

S807: If it is determined that the fifth flag bit is true, the screen collaboration service of the PC sends, to the super input/output service of the PC, a notification message indicating that the dragged picture enters the collaboration window.

Before sending, to the super input/output service of the PC, the notification message indicating that the dragged picture enters the collaboration window, the screen collaboration service of the PC may re-confirm whether the fifth flag bit is true, and a purpose is to check whether a current scenario is a scenario of collaborative input/output dragging.

S808: The super input/output service of the PC modifies a sixth flag bit to true.

An initial value of the sixth flag bit may be false.

The modified sixth flag bit may be denoted as superIODragInMirrorStatus_=true, to indicate that a file is dragged from the tablet computer across devices to the mobile phone collaboration window of the PC.

S809a: When it is detected that the picture is released in the collaboration window, the super input/output service of the PC sends, to the screen collaboration service of the PC, a notification message indicating that the picture is released.

S809b: When it is detected that the picture is released in the collaboration window, the super input/output service of the PC sends, to the super input/output service of the tablet computer, a notification message indicating that the picture is released.

For example, as shown in FIG. 7, when the user releases, in the window 101, the picture 5 dragged across devices, the super input/output service of the PC sends, to the screen collaboration service of the PC, the notification message indicating that the picture is released, and sends, to the super input/output service of the tablet computer, the notification message indicating that the picture is released.

An execution sequence of S809a and S809b is not limited in this embodiment, and S809a and S809b may be performed simultaneously or sequentially.

After S809a, the following step may be performed:
S810: The screen collaboration service of the PC modifies the fourth flag bit to false.

After receiving the notification message that is sent by the super input/output service of the PC and that indicating that the picture is released, the screen collaboration service of the PC modifies the fourth flag bit from true to fasle, and the modified fourth flag bit may be denoted as superIODragFileFlag_=fasle, to indicate that the super input/output of the PC currently is not dragging a file across devices.

After S809a, the following steps may be performed:
S811: The super input/output service of the tablet computer transfers the picture to the super input/output service of the PC.

S812: The super input/output service of the PC stores the picture to a target path.

S813: The super input/output service of the PC determines whether the sixth flag bit is true.

S814: If it is determined that the sixth flag bit is true, the super input/output service of the PC sends a picture transfer complete message to the screen collaboration service of the PC.

S815: The screen collaboration service of the PC obtains the picture from the target path.

After storing the picture to the target path, the super input/output service of the PC may determine whether the sixth flag bit is true, to learn whether a current scenario is a scenario of collaborative input/output dragging. If the sixth flag bit is true, the super input/output service of the PC determines that the current scenario is the scenario of collaborative input/output dragging, to send the picture transfer complete message to the screen collaboration service of the PC, so that the screen collaboration service of the PC obtains the picture from the target path.

S816: The screen collaboration service of the PC transfers the picture to the screen collaboration service of the mobile phone.

S817: The screen collaboration service of the mobile phone transfers the picture to a display driver of the mobile phone, to display the dragged picture on a screen of the mobile phone.

For example, as shown in FIG. 7, after the picture 5 is released in the window 101, the picture 5 is displayed on the screen of the mobile phone 200.

After S816, the following steps may be performed:
S818: After the picture is transferred to the mobile phone, the screen collaboration service of the PC sends a picture transfer complete message to the super input/output service of the PC.

S819: The super input/output service of the PC modifies the sixth flag bit to false.

The modified sixth flag bit may be denoted as superIODragInMirrorStatus_=false, to indicate that no file is currently dragged from the tablet computer to the mobile phone collaboration window of the PC across devices.

After S816, the following steps may be performed:
S820: After the picture is transferred to the mobile phone, the screen collaboration service of the PC modifies the fifth flag bit to false.

The modified fifth flag bit may be denoted as superIODragFileToMirror_=fasle, to indicate that no file is currently dragged from the tablet computer to the mobile phone collaboration window of the PC across devices.

S821: The screen collaboration service of the PC transfers the picture to a display driver of the PC, to display the dragged picture in the collaboration window.

For example, as shown in FIG. 7, after the picture 5 is released in the window 101, the picture 5 is displayed in the window 101.

In some embodiments, after S805, when it is detected that the file is not released after the dragged picture enters the collaboration window on the screen of the PC, and the picture is dragged again to return to a home screen of the PC, the super input/output service of the PC triggers a drag-leave (DragLeave) event of the super input/output, and modifies the fifth flag bit from true to false.

Based on the file sharing method shown in this embodiment, through information exchange between the screen collaboration service of the mobile phone, the screen collaboration service of the PC, the super input/output service of the PC, and the super input/output service of the mobile phone, a file that is selected by the user on the tablet computer and that is dragged across devices may be transferred to the mobile phone through the PC, and the file is displayed on the screen of the mobile phone and in the mobile phone collaboration window on the screen of the PC. In the foregoing solution, cross-device file sharing in a screen collaboration scenario can be implemented quickly and efficiently, and simplicity of a user operation can be improved.

In some embodiments, after the super input/output service of the PC is enabled, a virtual window, such as a window 103 in FIG. 5, is created in a lower right corner of a primary screen of the PC, and the virtual window is configured to detect a cross-device drag event on the primary screen of the PC. For example, referring to FIG. 5, when an extended screen of the PC is located on a primary screen of the tablet computer and the mobile phone collaboration window is located on the primary screen of the PC, the window 103 may detect a cross-device drag event on the primary screen of the PC when a picture is dragged from the mobile phone collaboration window of the PC to a left edge of the primary screen of the PC, and then may trigger S606a and S606b in FIG. 6A.

However, when the extended screen of the PC is located on the primary screen of the tablet computer, and the mobile phone collaboration window is located on the extended screen of the PC, referring to FIG. 2, when a picture is dragged from the mobile phone collaboration window on the extended screen of the PC to an edge of the extended screen of the PC, because the virtual window is located in the lower right corner of the primary screen of the PC, the virtual window cannot detect a cross-device drag event of the super input/output on the extended screen of the PC, and consequently, a file cannot be transferred across devices in this scenario.

For the foregoing problem, an embodiment of this application proposes a file sharing method. A virtual window may be created based on a location of a mobile phone collaboration window through detection of the location of the mobile phone collaboration window. If the mobile phone collaboration window is located on a primary screen of a PC, a super input/output service of the PC creates a virtual window in a lower right corner of the primary screen of the PC. Alternatively, if the mobile phone collaboration window is located on an extended screen of a PC, a super input/output service of the PC creates a virtual window in a lower right corner of the extended screen of the PC. In other words, the virtual window is located in a lower right corner of a screen on which the mobile phone collaboration window is located. In this way, regardless of whether the mobile phone collaboration window is on the primary screen of the PC or on the extended screen of the PC, when a file is dragged from the mobile phone collaboration window to an edge of the primary screen of the PC or the extended screen of the PC, the virtual window can trigger a cross-device drag event of a super input/output of the PC, to transfer a file across devices.

A file sharing method provided in this application is described in detail below with reference to FIG. 9 and FIG. 10A, FIG. 10B, and FIG. 10C.

FIG. 9 is a schematic diagram 3 of a scenario of a file sharing method according to an embodiment of this application. As shown in FIG. 9, an extended screen 304 of a PC 100 is displayed on a primary screen of a tablet computer 300, a collaboration window 305 of a mobile phone 200 is displayed on the extended screen 304, and an interface of an album application of the mobile phone 200 is synchronously displayed in the window 305 and on a screen of the mobile phone 200. A plurality of pictures, such as a picture 1 and a picture 2, are displayed in the interface. A user may use a wireless mouse to traverse to a screen of the tablet computer 300, select the picture 1 in the window 305, drag the picture 1 to screen space 306 on the primary screen of the tablet computer 300 other than the extended screen 304, and then release the picture 1. The mobile phone 200 transfers the picture 1 in the album application in the mobile phone 200 to the tablet computer 300 through the PC 100, and the picture 1 is displayed in the screen space 306 of the tablet computer 300.

In a process of dragging the picture on the extended screen 304, at a specific moment, as shown in 307 in FIG. 9, a cursor is presented on the extended screen 304, and a picture thumbnail is presented below the cursor. In a process of dragging the picture in the screen space 306, at a specific moment, as shown in 308 in FIG. 9, a cursor is presented in the screen space 306, a picture thumbnail is presented below the cursor, and a plus sign may be displayed in an upper left corner of the picture thumbnail, to indicate that a picture is imported into the tablet computer. FIG. 9 is merely an example. Styles of dragging a picture on different screens are not limited in this embodiment of this application.

Based on the scenario shown in FIG. 9, a process of interaction between devices is described below in detail with reference to FIG. 10A, FIG. 10B, and FIG. 10C.

FIG. 10A, FIG. 10B, and FIG. 10C are a schematic flowchart 3 of a file sharing method according to an embodiment of this application. The file sharing method shown in FIG. 10A, FIG. 10B, and FIG. 10C relates to a screen collaboration service of a mobile phone, a screen collaboration service and a super input/output service of a PC, and a super input/output service of a tablet computer.

In FIG. 10A, FIG. 10B, and FIG. 10C, screen collaboration has been established between the mobile phone and the PC, a super input/output has been established between the PC and the tablet computer, and sidecar has been established between the PC and the tablet computer. As shown in FIG. 10A, FIG. 10B, and FIG. 10C, the method includes the following steps:
S1001: When it is detected that a picture in a collaboration window is selected and dragged, the screen collaboration service of the PC sends a drag-enter event of screen collaboration to the super input/output service of the PC.

S1002: The super input/output service of the PC detects a location of the collaboration window.

S1003: When the collaboration window is on an extended screen of the PC, the super input/output of the PC creates a virtual window in a lower right corner of the extended screen of the PC.

The virtual window may be considered as a sub-process of the super input/output service of the PC, for example, a window 309 in FIG. 9, and is configured to detect a drag-enter event of the super input/output on the extended screen of the PC. The drag-enter event of the super input/output on the extended screen of the PC is triggered after a drag-enter event for a mobile phone collaboration window on the extended screen of the PC.

S1004: The super input/output service of the PC modifies a first flag bit to true.

S1005: When detecting that the picture is dragged to an edge of the extended screen of the PC, the super input/output service of the PC determines whether the first flag bit is ture.

After S1005 is performed, S1006 to S1009 are performed. S1006 to S1009 in this embodiment are similar to S604 to S607 in the foregoing embodiment. For details, reference may be made to the foregoing embodiment, and the details are not described herein.

After S1008b, the following steps may be performed:
S1010: When a drag-and-release operation is detected, the super input/output service of the tablet computer determines whether the picture is released in a valid screen area outside the extended screen.

S1011: If it is determined that the picture is released in the valid screen area outside the extended screen, the super input/output service of the tablet computer sends, to the super input/output service of the PC, a notification message indicating that the picture is released in the valid screen area outside the extended screen.

S1012: The super input/output service of the PC determines whether the second flag bit is true.

S1013: If it is determined that the second flag bit is true, the super input/output service of the PC sends, to the screen collaboration service of the PC, a notification message indicating that the picture is released in the valid screen area outside the extended screen.

S1014: If it is determined that the second flag bit is true, the super input/output service of the PC modifies the first flag bit to false.

After S1013, the following steps may be performed:
S1015 to S1025. S1015 to S1025 in this embodiment are similar to S613 to S6023 in the foregoing embodiment. For details, reference may be made to the foregoing embodiment, and the details are not described herein.

Based on the file sharing method shown in this embodiment, the virtual window is created on a screen on which the mobile phone collaboration window is located, that is, the lower right corner of the extended screen of the PC, so that the super input/output of the PC can detect a cross-device drag event of the super input/output on the extended screen of the PC. In this way, a file in the mobile phone collaboration window on the extended screen of the PC is transferred to the tablet computer through the PC, and is displayed on a primary screen of the tablet computer. In the foregoing solution, cross-device file sharing in a screen collaboration scenario can be implemented quickly and efficiently, and simplicity of a user operation can be improved.

Based on the foregoing several embodiments, an embodiment of this application proposes a file sharing method, applied to a system including a first electronic device, a second electronic device, and a third electronic device, where the first electronic device is separately connected to the second electronic device and the third electronic device. The method includes: The first electronic device displays a first window, where screen content of the second electronic device is displayed in the first window, and the screen content of the second electronic device includes a first file; and when the first file is dragged from the first window to a valid screen area of the third electronic device, the third electronic device displays the first file in response to a drag-and-release operation on the first file.

The first electronic device is wiredly or wirelessly connected to the second electronic device, and the first electronic device is wiredly or wirelessly connected to the third electronic device. The first window displayed by the first electronic device is a collaboration window of the second electronic device, and content displayed in the first window may be consistent with content displayed on a display screen of the second electronic device. When the content displayed in the first window is consistent with the content displayed on the display screen of the second electronic device, the first window may be considered as a mirrored window of the second electronic device on the first electronic device. In an example, the first file is displayed in the first window, and the first file is displayed on the display screen of the second electronic device. The first file is a file locally stored on the second electronic device. For example, the first file may be a picture, a video, text, audio, an application, or the like.

For example, referring to FIG. 5, the first electronic device is a personal computer PC 100, the second electronic device is a mobile phone 200, and the third electronic device is a tablet computer 300. The PC 100 is wiredly or wirelessly connected to the mobile phone 200, and the PC 100 is wiredly or wirelessly connected to the tablet computer 300. The first window is a window 101, and the first file displayed in the first window is a picture 1. The valid screen area of the third electronic device is an area 301 on a display screen of the tablet computer 300. A user may use a wireless mouse to drag the picture 1 across a screen edge of the PC 100 to the area 301 of the tablet computer 300 and then release the picture 1, where the picture 1 is displayed in the area 301.

In the foregoing method, content projected by the second electronic device to the first electronic device is displayed in the first window of the first electronic device, and the user drags the first file in the first window to the third electronic device across devices, so that the first file locally stored on the second electronic device is dragged to the third electronic device for display through the first electronic device. An operation process is simple, and cross-device file sharing in a screen collaboration scenario can be implemented quickly and efficiently.

In an optional embodiment, before the third electronic device displays the first file, the method further includes: The second electronic device transfers the first file to the first electronic device, and the first electronic device transfers the first file to the third electronic device.

In the foregoing method, the second electronic device transfers, to the third electronic device through the first electronic device, the first file dragged by the user, to implement cross-device file transfer in the screen collaboration scenario.

In an optional embodiment, before the second electronic device transfers the first file to the first electronic device, the method further includes: In response to the drag-and-release operation on the first file, the third electronic device determines whether a location on which the first file is released is in a valid screen area of the third electronic device; if yes, the third electronic device sends a first notification message to the first electronic device, where the first notification message is used to indicate that the first file is released in the valid screen area of the third electronic device; and the first electronic device sends a file transfer request to the second electronic device, where the file transfer request is used to request to transfer the first file.

For example, still referring to FIG. 5, the drag-and-release operation on the first file is a drag-and-release operation on the picture 1 on the display screen of the tablet computer 300. The valid screen area of the third electronic device is the area 301 on the display screen of the tablet computer 300. It should be understood that, if the picture 1 is dragged to an area outside the area 301, because the area is not the valid screen area of the tablet computer 300, current cross-device dragging fails, and the tablet computer 300 does not receive the picture 1 and does not display the picture 1. The first notification message sent by the third electronic device to the first electronic device may correspond to a notification message in S609 in FIG. 6B. The first transfer request sent by the first electronic device to the second electronic device may correspond to a file transfer request in S613 in FIG. 6B.

In the foregoing method, after the first electronic device receives a notification that is sent by the third electronic device and that indicates that the file is released in the valid screen area, the first electronic device obtains the dragged first file from the second electronic device, and further transfers the first file to the third electronic device for display, thereby implementing cross-device file sharing in the screen collaboration scenario. It should be understood that if the first electronic device receives a notification that is sent by the third electronic device and that indicates that the file is not released in the valid screen area, the first electronic device does not obtain the first file from the second electronic device, and the third electronic device does not receive the first file and does not display the first file.

In an optional embodiment, the method further includes: The first electronic device sends a first cross-device drag event to the third electronic device when the first file is dragged from the first window to a screen edge of the first electronic device, where the first cross-device drag event is used to indicate that a file is to be dragged from the first electronic device to the third electronic device.

For example, still referring to FIG. 5, when the picture 1 is dragged from the window 101 of the PC 100 to a left screen edge of the PC 100, the PC 100 sends a first cross-device drag event to the tablet computer 300, to indicate that a picture is to be dragged from the PC 100 to the tablet computer 300. The first cross-device drag event may correspond to a drag-enter event of a super input/output in S606b in FIG. 6A.

In the foregoing method, when the first file is dragged to a screen edge of a primary screen of the first electronic device, the first electronic device notifies, by sending the first cross-device drag event, the third electronic device that a file is to be dragged into the third electronic device across devices, so that the third electronic device starts to monitor the dragged first file.

In an optional embodiment, the method further includes: The third electronic device displays a second file, where the second file is a file locally stored on the third electronic device; and when the second file is dragged from a screen of the third electronic device to the first window, the first window and the second electronic device display the second file in response to a drag-and-release operation on the second file.

The second file may be a picture, a video, text, audio, an application, or the like. For example, referring to FIG. 7, the second file is a picture 5, and the picture 5 is displayed on the display screen of the tablet computer 300. The user may use the wireless mouse to drag the picture 5 across a screen edge of the tablet computer 300 to the window 101 of the PC 100 and then release the picture 5, where the picture 5 is displayed in the window 101, and the picture 5 is displayed on a display screen of the mobile phone 200.

In the foregoing method, content projected by the second electronic device to the first electronic device is displayed in the first window of the first electronic device. By dragging a third file in the third electronic device to the first window across devices, the user may drag the second file locally stored on the third electronic device to the second electronic device for display through the first electronic device, and the first window may synchronously display the second file. An operation process is simple, and cross-device file sharing in the screen collaboration scenario can be implemented quickly and efficiently.

In an optional embodiment, before the first window and the second electronic device display the second file, the method further includes: The third electronic device transfers the second file to the first electronic device, and the first electronic device transfers the second file to the second electronic device.

In the foregoing method, the third electronic device transfers, to the second electronic device through the first electronic device, the second file dragged by the user, thereby implementing cross-device file transfer in the screen collaboration scenario.

In an optional embodiment, that the third electronic device transfers the second file to the first electronic device includes: The first electronic device sends a second notification message to the third electronic device in response to a drag-and-release operation on the second file, where the second notification message is used to indicate that the second file is released in the first window; and the third electronic device transfers the second file to the first electronic device.

For example, still referring to FIG. 7, the drag-and-release operation on the second file is a drag-and-release operation on the picture 5 in the window 101 of the PC 100. The second notification message sent by the first electronic device to the third electronic device may correspond to a notification message in S809b in FIG. 8A. That the third electronic device transfers the second file to the first electronic device may correspond to S811 in FIG. 8B.

In the foregoing method, after the third electronic device receives a notification that is sent by the first electronic device and that indicates that a file is released in the first window, the third electronic device transfers the second file to the first electronic device, so that the first electronic device transfers the second file to the second electronic device for display, thereby implementing cross-device file sharing in the screen collaboration scenario.

In an optional embodiment, the method further includes: The third electronic device sends a second cross-device drag event to the first electronic device when the second file is dragged to a screen edge of the third electronic device, where the second cross-device drag event is used to indicate that a file is to be dragged from the third electronic device to the first electronic device.

For example, still referring to FIG. 7, when the picture 5 is dragged from the tablet computer 300 to a right screen edge of the tablet computer 300, the tablet computer 300 sends a second cross-device drag event to the PC 100, to indicate that a picture is to be dragged from the tablet computer 300 to the PC 100, and the second cross-device drag event may correspond to a drag-enter event of a super input/output in S801 in FIG. 8A.

In the foregoing method, when the second file is dragged to the screen edge of the third electronic device, the third electronic device notifies, by sending the second cross-device drag event, the first electronic device that a file is to be dragged into the first electronic device across devices, so that the first electronic device starts to monitor the dragged second file.

In an optional embodiment, the method further includes: A super input/output service of the first electronic device creates a first virtual window after the super input/output service of the first electronic device is enabled, where the first virtual window is configured to detect a cross-device drag event on a primary screen of the first electronic device.

The first virtual window is located in a lower right corner of the primary screen of the first electronic device, and may trigger the cross-device drag event on the primary screen of the first electronic device. For example, referring to FIG. 5, the first electronic device is the PC 100, and the first virtual window is a window 103 in a lower right corner of a primary screen of the PC 100. The first virtual window may be configured to detect the foregoing first cross-device drag event and the foregoing second cross-device drag event.

According to a second aspect, an embodiment of this application provides a file sharing method, applied to a system including a first electronic device, a second electronic device, and a third electronic device, where the first electronic device is separately connected to the second electronic device and the third electronic device. The method includes: The third electronic device displays an extended screen of the first electronic device, where the extended screen occupies a part of screen space of the third electronic device, a second window is displayed on the extended screen, screen content of the second electronic device is displayed in the second window, and the screen content of the second electronic device includes a third file; and when the third file is dragged from the second window to first screen space of the third electronic device other than the extended screen, the third file is displayed in the first screen space of the third electronic device in response to a drag-and-release operation on the third file.

The first electronic device is wiredly or wirelessly connected to the second electronic device, and the first electronic device is wiredly or wirelessly connected to the third electronic device. The second window is a collaboration window of the second electronic device, and content displayed in the second window may be consistent with content displayed on a display screen of the second electronic device. When the content displayed in the second window is consistent with the content displayed on the display screen of the second electronic device, the second window may be considered as a mirrored window of the second electronic device on the first electronic device. In an example, the third file is displayed in the second window, and the third file is displayed on the display screen of the second electronic device. The third file is a file locally stored on the second electronic device. For example, the third file may be a picture, a video, text, audio, an application, or the like.

For example, referring to FIG. 9, the first electronic device is a personal computer PC 100, the second electronic device is a mobile phone 200, and the third electronic device is a tablet computer 300. The PC 100 is wiredly or wirelessly connected to the mobile phone 200, and the PC 100 is wiredly or wirelessly connected to the tablet computer 300. The extended screen of the first electronic device is an extended screen 304 that is projected by the PC 100 to the tablet computer 300, and the extended screen 304 occupies a part of screen space of a display screen of the tablet computer 300. The second window is a window 305 on the extended screen 304, and the third file displayed in the second window is a picture 1. The first screen space of the third electronic device is screen space 306 of the tablet computer 300 other than the extended screen 304. A user may use a wireless mouse to drag the picture 1 from the window 305 of the tablet computer 300 to the screen space 306 and then release the picture, where the picture 1 is displayed in the screen space 306.

In the foregoing method, the first electronic device projects the extended screen of the first electronic device onto a display screen of the third electronic device, and the second window of the second electronic device is displayed on the extended screen of the first electronic device. The user drags the third file in the second window to the first screen space of the third electronic device, to drag the third file locally stored on the second electronic device to the third electronic device for display. An operation process is simple, and cross-device file sharing in a screen collaboration scenario can be implemented quickly and efficiently.

In an optional embodiment, before the third file is displayed on the first screen space of the third electronic device, the method further includes: The second electronic device transfers the third file to the first electronic device, and the first electronic device transfers the third file to the third electronic device.

In the foregoing method, the second electronic device transfers, to the third electronic device through the first electronic device, the third file dragged by the user, thereby implementing cross-device file transfer in the screen collaboration scenario.

In an optional embodiment, the first electronic device sends a third cross-device drag event to the third electronic device when the third file is dragged from the second window to a screen edge of the extended screen of the first electronic device, where the third cross-device drag event is used to indicate that a file is to be dragged from the extended screen of the first electronic device to the third electronic device.

For example, still referring to FIG. 9, when the picture 1 is dragged from the window 305 to a screen edge of the extended screen 304 of the PC 100, the PC 100 sends a third cross-device drag event to the tablet computer 300, to indicate that a picture is to be dragged from the extended screen 304 of the PC 100 to the tablet computer 300, and the third cross-device drag event may correspond to a drag-enter event of a super input/output in S 1008b in FIG. 10A.

In the foregoing method, when the third file is dragged to the screen edge of the extended screen of the first electronic device, the first electronic device notifies, by sending the third cross-device drag event, the third electronic device that a file is to be dragged into the third electronic device across devices, so that the third electronic device starts to monitor the dragged third file.

In an optional embodiment, the method further includes: A super input/output service of the first electronic device creates a second virtual window when the third file in the second window is selected and dragged, where the second virtual window is configured to detect a cross-device drag event on the extended screen of the first electronic device.

The second virtual window is located in a lower right corner of the extended screen of the first electronic device, and may trigger the cross-device drag event on the extended screen of the first electronic device. For example, referring to FIG. 9, the first electronic device is the PC 100, and the second virtual window is a window 309 in a lower right corner of the extended screen 304 of the PC 100. The second virtual window may be configured to detect the foregoing third cross-device drag event.

In an optional embodiment, a first operating system is installed on the first electronic device, a second operating system is installed on the second electronic device and the third electronic device, and the first operating system and the second operating system are different.

For example, the first operating system is a windows operating system, and the second operating system is an Android operating system.

It should be noted that, a specific structure of an execution body of the file sharing method is not particularly limited in the embodiments of this application, provided that code storing the file sharing method in the embodiments of this application can be run to perform processing based on the file sharing method provided in the embodiments of this application. For example, the file sharing method provided in the embodiments of this application may be performed by a functional module that is in an electronic device and that can invoke a program and execute the program or a processing apparatus applied to an electronic device, for example, the processing apparatus is a chip.

In the foregoing embodiments, a module/service may be a software program, a hardware circuit, or a combination of the foregoing functions. The hardware circuit may include an application-specific integrated circuit (application specific integrated circuit, ASIC), an electronic circuit, a processor (for example, a shared processor, a dedicated processor, or a processor group) and a memory configured to execute one or more software or firmware programs, a combinational logic circuit, and/or another proper component that supports the described functions.

Therefore, the example modules/services described in the embodiments of this application can be implemented by electronic hardware or a combination of computer software and electronic hardware. Whether the functions are performed by hardware or software depends on particular applications and design constraints of the technical solutions. A person skilled in the art may use different methods to implement the described functions for each specific application, but it should not be considered that such an implementation goes beyond the scope of this application.

An embodiment of this application further provides an electronic device. The electronic device may correspond to the first electronic device in the foregoing embodiment. The first electronic device includes a memory and a processor. The processor is configured to invoke a computer program in the memory to execute technical solutions of the PC in any one of the foregoing method embodiments. Implementation principles and technical effects of the electronic device are similar to those of the foregoing related embodiments. Details are not described herein again.

An embodiment of this application further provides an electronic device. The electronic device may correspond to the second electronic device in the foregoing embodiment. The second electronic device includes a memory and a processor. The processor is configured to invoke a computer program in the memory to execute technical solutions of the mobile phone in any one of the foregoing method embodiments. Implementation principles and technical effects of the electronic device are similar to those of the foregoing related embodiments. Details are not described herein again.

An embodiment of this application further provides an electronic device. The electronic device may correspond to the third electronic device in the foregoing embodiment. The third electronic device includes a memory and a processor. The processor is configured to invoke a computer program in the memory to execute technical solutions of the tablet computer in any one of the foregoing method embodiments. Implementation principles and technical effects of the electronic device are similar to those of the foregoing related embodiments. Details are not described herein again.

The memory may be but is not limited to a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer. The memory may exist independently, and is connected to the processor by using a communication line. The memory may be alternatively integrated into the processor.

The processor may be a general-purpose central processing unit (central processing unit, CPU), a microprocessor, an application-specific integrated circuit (application-specific integrated circuit, ASIC), or one or more integrated circuits configured to control program execution in the solutions in this application.

An embodiment of this application further provides a computer-readable storage medium. The computer-readable storage medium stores computer instructions. When the computer instructions are run on a first electronic device, the first electronic device is enabled to execute technical solutions of the PC in any one of the foregoing embodiments. Implementation principles and technical effects of the computer-readable storage medium are similar to those of the foregoing related embodiments. Details are not described herein again.

An embodiment of this application further provides a computer-readable storage medium. The computer-readable storage medium stores computer instructions. When the computer instructions are run on a second electronic device, the second electronic device is enabled to execute technical solutions of the mobile phone in any one of the foregoing embodiments. Implementation principles and technical effects of the computer-readable storage medium are similar to those of the foregoing related embodiments. Details are not described herein again.

An embodiment of this application further provides a computer-readable storage medium. The computer-readable storage medium stores computer instructions. When the computer instructions are run on a third electronic device, the third electronic device is enabled to execute technical solutions of the tablet computer in any one of the foregoing embodiments. Implementation principles and technical effects of the computer-readable storage medium are similar to those of the foregoing related embodiments. Details are not described herein again.

An embodiment of this application provides a chip. The chip includes a processor. The processor is configured to invoke a computer program in a memory, to execute technical solutions of the PC in any one of the foregoing method embodiments. Implementation principles and technical effects of the chip are similar to those of the foregoing related embodiments. Details are not described herein again.

An embodiment of this application provides a chip. The chip includes a processor. The processor is configured to invoke a computer program in a memory, to execute technical solutions of the mobile phone in any one of the foregoing method embodiments. Implementation principles and technical effects of the chip are similar to those of the foregoing related embodiments. Details are not described herein again.

An embodiment of this application provides a chip. The chip includes a processor. The processor is configured to invoke a computer program in a memory, to execute technical solutions of the tablet computer in any one of the foregoing method embodiments. Implementation principles and technical effects of the chip are similar to those of the foregoing related embodiments. Details are not described herein again.

An embodiment of this application provides a computer program product. When the computer program product is run on a first electronic device, the first electronic device is enabled to execute technical solutions of the PC in any one of the foregoing method embodiments. Implementation principles and technical effects of the computer program product are similar to those of the foregoing related embodiments. Details are not described herein again.

An embodiment of this application provides a computer program product. When the computer program product is run on a second electronic device, the second electronic device is enabled to execute technical solutions of the mobile phone in any one of the foregoing method embodiments. Implementation principles and technical effects of the computer program product are similar to those of the foregoing related embodiments. Details are not described herein again.

An embodiment of this application provides a computer program product. When the computer program product is run on a third electronic device, the third electronic device is enabled to execute technical solutions of the tablet computer in any one of the foregoing method embodiments. Implementation principles and technical effects of the computer program product are similar to those of the foregoing related embodiments. Details are not described herein again.

An embodiment of this application provides a cross-device dragging system. Referring to FIG. 1 or FIG. 2, the system includes a first electronic device 100, a second electronic device 200, and a third electronic device 300, and the first electronic device 100 is separately connected to the second electronic device 200 and the third electronic device 300. The first electronic device 100 executes technical solutions of the PC in any one of the foregoing method embodiments, the second electronic device 200 executes technical solutions of the mobile phone in the foregoing method embodiments, and the third electronic device 300 executes solutions of the tablet computer in any of the foregoing method embodiments. Implementation principles and technical effects of the cross-device dragging system are similar to those of the foregoing related embodiments. Details are not described herein again.

The objectives, technical solutions, and beneficial effects of this application are further described in detail in the foregoing specific implementations. It should be understood that the foregoing descriptions are merely specific implementations of this application, but are not intended to limit the protection scope of this application. Any modification, equivalent replacement, or improvement made based on the technical solutions of this application shall fall within the protection scope of this application.

## Claims

1. A file sharing method, applied to a system comprising a first electronic device, a second electronic device, and a third electronic device, wherein the first electronic device is separately connected to the second electronic device and the third electronic device, and the method comprises:
displaying, by the first electronic device, a first window, wherein screen content of the second electronic device is displayed in the first window, and the screen content of the second electronic device comprises a first file; and
when the first file is dragged from the first window to a valid screen area of the third electronic device, displaying, by the third electronic device, the first file in response to a drag-and-release operation on the first file.

2. The method according to claim 1, wherein before the displaying, by the third electronic device, the first file, the method further comprises:
transferring, by the second electronic device, the first file to the first electronic device; and
transferring, by the first electronic device, the first file to the third electronic device.

3. The method according to claim 2, wherein before the transferring, by the second electronic device, the first file to the first electronic device, the method further comprises:
in response to the drag-and-release operation on the first file, determining, by the third electronic device, whether a location on which the first file is released is in the valid screen area of the third electronic device;
if yes, sending, by the third electronic device, a first notification message to the first electronic device, wherein the first notification message is used to indicate that the first file is released in the valid screen area of the third electronic device; and
sending, by the first electronic device, a file transfer request to the second electronic device, wherein the file transfer request is used to request to transfer the first file.

4. The method according to claims 1 to 3, wherein the method further comprises:
sending, by the first electronic device, a first cross-device drag event to the third electronic device when the first file is dragged from the first window to a screen edge of the first electronic device, wherein the first cross-device drag event is used to indicate that a file is to be dragged from the first electronic device to the third electronic device.

5. The method according to any one of claims 1 to 4, wherein the method further comprises:
displaying, by the third electronic device, a second file, wherein the second file is a file locally stored on the third electronic device; and
when the second file is dragged from a screen of the third electronic device to the first window, displaying, by the first window and the second electronic device, the second file in response to a drag-and-release operation on the second file.

6. The method according to claim 5, wherein before the displaying, by the first window and the second electronic device, the second file, the method further comprises:
transferring, by the third electronic device, the second file to the first electronic device; and
transferring, by the first electronic device, the second file to the second electronic device.

7. The method according to claim 6, wherein the transferring, by the third electronic device, the second file to the first electronic device comprises:
sending, by the first electronic device, a second notification message to the third electronic device in response to the drag-and-release operation on the second file, wherein the second notification message is used to indicate that the second file is released in the first window; and
transferring, by the third electronic device, the second file to the first electronic device.

8. The method according to any one of claims 5 to 7, wherein the method further comprises:
sending, by the third electronic device, a second cross-device drag event to the first electronic device when the second file is dragged to a screen edge of the third electronic device, wherein the second cross-device drag event is used to indicate that a file is to be dragged from the third electronic device to the first electronic device.

9. The method according to any one of claims 1 to 8, wherein the method further comprises:
creating, by a super input/output service of the first electronic device, a first virtual window after the super input/output service of the first electronic device is enabled, wherein
the first virtual window is configured to detect a cross-device drag event on a primary screen of the first electronic device.

10. A file sharing method, applied to a system comprising a first electronic device, a second electronic device, and a third electronic device, wherein the first electronic device is separately connected to the second electronic device and the third electronic device, and the method comprises:
displaying, by the third electronic device, an extended screen of the first electronic device, wherein the extended screen occupies a part of screen space of the third electronic device, a second window is displayed on the extended screen, screen content of the second electronic device is displayed in the second window, and the screen content of the second electronic device comprises a third file; and
when the third file is dragged from the second window to first screen space of the third electronic device other than the extended screen, displaying the third file in the first screen space of the third electronic device in response to a drag-and-release operation on the third file.

11. The method according to claim 10, wherein before the displaying the third file in the first screen space of the third electronic device, the method further comprises:
transferring, by the second electronic device, the third file to the first electronic device; and
transferring, by the first electronic device, the third file to the third electronic device.

12. The method according to claim 10 or 11, wherein the first electronic device sends a third cross-device drag event to the third electronic device when the third file is dragged from the second window to a screen edge of the extended screen of the first electronic device, wherein the third cross-device drag event is used to indicate that a file is to be dragged from the extended screen of the first electronic device to the third electronic device.

13. The method according to any one of claims 10 to 12, wherein the method further comprises:
creating, by a super input/output service of the first electronic device, a second virtual window when the third file in the second window is selected and dragged, wherein
the second virtual window is configured to detect a cross-device drag event on the extended screen of the first electronic device.

14. The method according to any one of claims 1 to 13, wherein
a first operating system is installed on the first electronic device, a second operating system is installed on the second electronic device and the third electronic device, and the first operating system is different from the second operating system.

15. An electronic device, wherein the electronic device comprises a memory and a processor, and the processor is configured to invoke a computer program in the memory to perform the method of the first electronic device according to any one of claims 1 to 14, the method of the second electronic device according to any one of claims 1 to 14, or the method of the third electronic device according to any one of claims 1 to 14.

16. A chip, wherein the chip comprises a processor, and the processor is configured to invoke a computer program in a memory, to enable the chip to perform the method of the first electronic device according to any one of claims 1 to 14, the method of the second electronic device according to any one of claims 1 to 14, or the method of the third electronic device according to any one of claims 1 to 14.

17. A computer-readable storage medium, wherein the computer-readable storage medium stores a computer program, and when the computer program is run on an electronic device, the electronic device is enabled to perform the method of the first electronic device according to any one of claims 1 to 14, the method of the second electronic device according to any one of claims 1 to 14, or the method of the third electronic device according to any one of claims 1 to 14.
